(19) Europäisches Patentamt / European Patent Office / Office européen des brevets

(11) **EP 1 912 204 A1**

(12) **EUROPEAN PATENT APPLICATION**
published in accordance with Art. 153(4) EPC

(43) Date of publication:
**16.04.2008 Bulletin 2008/16**

(51) Int Cl.:
**G10K 15/02** (2006.01)

(21) Application number: **06767674.2**

(22) Date of filing: **30.06.2006**

(86) International application number:
**PCT/JP2006/313066**

(87) International publication number:
**WO 2007/007566 (18.01.2007 Gazette 2007/03)**

(84) Designated Contracting States:
**FR GB**

(30) Priority: **11.07.2005 JP 2005201672**

(71) Applicant: **FAITH, INC.**
**Kyoto-shi, Kyoto 604-8171 (JP)**

(72) Inventors:
• **SHIMBAYASHI, Toru,**
**c/o Faith Inc.**
**Nakagyo-ku,**
**Kyoto-shi,**
**Kyoto 604-8171 (JP)**

• **KOMORI, Yorimoto,**
**c/o Faith Inc.**
**Nakagyo-ku,**
**Kyoto-shi,**
**Kyoto 604-8171 (JP)**

(74) Representative: **Arth, Hans-Lothar**
**Arth, Bucher & Kollegen,**
**Am Klopferspitz 19 (IZB)**
**82152 Martinsried (DE)**

(54) **MUSIC COMPOSITION REPRODUCTION MANAGEMENT SYSTEM**

(57)     [Problems] To provide a system for promoting user-friendly distribution of music composition data while considering the benefit of an author.

[MEANS FOR SOLVING PROBLEMS] When a user operates a mobile telephone (8) to give a reproduction instruction for reproducing music composition content downloaded, the mobile telephone (8) performs reproduction by converting the music content into waveform music composition data. Here, the mobile telephone (8) generates feature data indicating a feature of the converted waveform music composition data (object feature data). Furthermore, it is judged whether right feature data matched with the object feature data is recorded. If not recorded, the mobile telephone (8) interrupts reproduction. If recorded, the mobile telephone (8) continues reproduction. Thus, only the mobile telephone (8) having the right feature data can reproduce the music composition content.

**FIG.2**

EP 1 912 204 A1

**Description**

**Technical Field**

The present invention relates to a system for managing reproduction of music.

**Background Art**

A scheme which protects an author and widely delivers music data has been proposed. For example, according to Patent Document 1, a cryptography key associated with a user is recorded in music distribution server, a terminal device which reproduces music is connected to the music distribution server, the cryptography key is used in order to decode a code of music data, and reproduction and an output are performed. Further, the music data is transmitted from the music distribution server to the terminal device, the code is decoded in real time, and the reproduction is performed. After the reproduction, the music data in the terminal device is deleted. As a result, even if solely the music data is duplicated, reproduction cannot be performed by another terminal device. Therefore, the benefit of an author is not impaired.
Patent Document 1 : JP-A-2004-198509

**Disclosure of the Invention**

Problem to be Solved by the Invention

However, the benefit of an author is considered too much by a conventional system such as described above. Therefore, there is a problem in which distribution of music data is not promoted. According to the system described above, music can be listened to only by a user who has been registered in the music distribution server. Moreover, music can be listened to only in a state in which a connection to the music distribution server is established. In addition, when the music distribution server delivers music data in a specific format, if it is attempted to reproduce music data in another format with regard to a same music, it is necessary to enter into another contract concerning another music distribution server. A situation such as this occurs when a terminal device for reproducing music is newly bought, for example.
An object of the present invention made in view of such drawbacks described above is to provide a system which promotes user-friendly distribution of music data while the benefit of an author is considered.

Means for Solving the Problem

The present invention includes a plurality of independent aspects as described below.
(1) Music reproduction management system according to the present invention is music reproduction management system which manages reproduction of music, including: a right characteristic data record section for recording right characteristic data resulted from extracting a waveform characteristic of music waveform data obtained on the basis of music data whose right is owned by a user; music data acquisition means for acquiring music data; reproduction means for converting the acquired music data into music waveform data to be output as music; object characteristic data generation means for generating object characteristic data by extracting waveform characteristic of music waveform data obtained on the basis of the music data; determination means for determining whether or not right characteristic data matched with the object characteristic data is recorded in the right characteristic data record section; and control means for changing a reproduction state by the reproduction means according to a determination result of the determination means.
As a result, since the right characteristic data generated on the basis of the waveform characteristic of the music waveform data is used, it is possible to control reproduction irrespective of a format of the music data. Further, a right can be processed regardless of the process of obtainment and a data format of the music data.
(2) to (6) Music reproduction management system according to the present invention includes: a management device; and music reproduction device which can communicate with the management device; in which the management device further includes right characteristic data acquisition means for acquiring right characteristic data with regard to music data as a purchase request object in response to a purchase request from the music reproduction device, and transmitting means for transmitting the right characteristic data to the music reproduction device, and the music reproduction device has the right characteristic data record section, the music data acquisition means, the reproduction means, the object characteristic data generation means, the determination means, and control means and further includes reception record means for receiving the right characteristic data from the management device and for recording the right characteristic data in the right characteristic data record section.
As a result, it is possible to acquire the right characteristic data from the management device and to record the right characteristic data in the music reproduction device.

(7) to (10) Music reproduction management system according to the present invention includes: the management device; and the music reproduction device which can communicate with the management device; in which the management device has the right characteristic data record section, right characteristic data of each user of the music reproduction device is recorded in the right characteristic data record section, the music reproduction device has the music data acquisition means, the reproduction means, the object characteristic data generation means, the determination means, and control means, and the determination means refers to the right characteristic data record section of the management device and determines whether right characteristic data matched with object characteristic data associated with the user is recorded.

As a result, after the right characteristic data of each user is recorded in the management device, it is possible to determine whether or not there is a right by accessing the right characteristic data from the music reproduction device.

(11) to (13) Music reproduction management system according to the present invention includes: the management device; and music reproduction device which can communicate with the management device; in which the management device includes a right characteristic data record section, the object characteristic data generation means, the determination means, and control means, the control means controls music data transmitted to the music reproduction device according to a determination result of the determination means in order to control reproduction by the reproduction means, the music reproduction device includes the music data acquisition means and the reproduction means, and the reproduction means reproduces the music data transmitted from the management device.

As a result, a determination of a right is performed in the management device, and reproduction in the reproduction device can be controlled.

(14)(15) In music reproduction management system according to the present invention, the management device further includes the right characteristic data acquisition means for acquiring right characteristic data with regard to music data as a purchase request object in response to a purchase request from the music reproduction device and for recording the right characteristic data associated with a user in the right characteristic data record section, and the music reproduction device further includes the transmitting means for transmitting the purchase request of the music data to the management device.

As a result, the right characteristic data can be recorded according to the purchase request from the user.

(16) In music reproduction management system according to the present invention, the management device is constituted by including a contents server device and a key issuing server device, the contents server device transmits music data according to a purchase request from the music reproduction device, and the key issuing server device acquires right characteristic data corresponding to the music data transmitted from the contents server device according to the purchase request from the music reproduction device.

As a result, it is possible to deliver the music data at the same time.

(17) In music reproduction management system according to the present invention, the determination means records a determination result associated with music data, the object characteristic data generation means does not generate object characteristic data of the music data, the determination means does not perform a determination, and the control means performs control on the basis of the recorded determination result when the music data is reproduced for a second time or more.

As a result, a determination of the determination means is not necessary from a second occasion, and prompt processing is achieved.

(18) In music reproduction management system according to the present invention, the control means does not allow the reproduction means to reproduce music data if a determination result of the determination means is negative.

As a result, reproduction of music data can be prohibited if a right is not owned.

(19) In music reproduction management system according to the present invention, the control means allows the reproduction means to reproduce music data only for a predetermined period of time even if a determination result of the determination means is negative and does not allow reproduction after the predetermined period of time.

As a result, a part of the music data can be temporarily listened to even when a right is not owned.

(20) In music reproduction management system according to the present invention, the control means allows the reproduction means to reproduce music data by degrading quality of the music data if a determination result of the determination means is negative.

As a result, the degraded music data can be temporarily listened to even when a right is not owned.

(21) In music reproduction management system according to the present invention, the right characteristic data record section is a detachable portable storage medium.

As a result, music data whose right is owned can be reproduced even by a different reproduction device if the detachable portable storage medium is provided.

(22) In music reproduction management system according to the present invention, right characteristic data or object characteristic data is data made by sampling a starting part of music waveform data with a plurality of overlapping windows, by expressing a result of frequency analysis of the waveform sampled by each window in binary digit, and by arranging the result in order of time series.

As a result, a waveform characteristic can be extracted accurately.

(23) In music reproduction management system according to the present invention, the determination means determines that right characteristic data and object characteristic data are matched with each other if a matching ratio between binary digit data of the right characteristic data and binary digit data of the object characteristic data exceeds a predetermined ratio.

As a result, matching between the right characteristic data and the object characteristic data can be determined accurately.

(24) In music reproduction management system according to the present invention, a plurality of right characteristic data and object characteristic data is generated with different parameters, and the determination means determines whether or not the right characteristic data and the object characteristic data are matched with each other depending on a matching ratio of a plurality of the right characteristic data and the object characteristic data.

As a result, a more accurate determination can be performed.

(25) In music reproduction management system according to the present invention, the management device is a management server device connected to the Internet, and the music reproduction device is a portable terminal device which can be connected to the Internet.

As a result, when music is reproduced in the portable terminal device, a right can be processed.

(26) In music reproduction management system according to the present invention, the management device is a portable terminal device, and the music reproduction device is music reproduction apparatus which can communicate with the portable terminal device.

As a result, when music is reproduced in the music reproduction apparatus, a right can be processed.

(27) In music reproduction management system according to the present invention, the music reproduction apparatus is a TV set, an audio apparatus, or a car navigation device.

As a result, when music is reproduced by the TV set, the audio apparatus, or the car navigation device, a right can be processed.

(28) In music reproduction management system according to the present invention, the record means for recording a determination result of the determination means in a determination result record section is provided.

As a result, it is possible to keep a record concerning reproduction based on a right and reproduction not based on a right.

(29) According to music reproduction management method according to the present invention, right characteristic data resulted from extracting a characteristic of music waveform data whose right is owned by a user is recorded in the right characteristic data record section by associating the right characteristic data with the user of music reproduction terminal device, object characteristic data is generated by extracting a waveform characteristic of music waveform data obtained on the basis of music data as a reproduction object, it is determined whether or not right characteristic data matched with the object characteristic data is recorded in the right characteristic data record section, and a reproduction state by the reproduction means is changed according to a determination result of the determination means.

As a result, since the right characteristic data generated on the basis of the waveform characteristic of the music waveform data is used, it is possible to control reproduction irrespective of a format of the music data.

(30) Music reproduction management system according to the present invention includes: the right characteristic data record section for recording right characteristic data resulted from extracting a waveform characteristic of music waveform data obtained on the basis of music data whose right is owned by a user; the music data acquisition means for acquiring music data; the reproduction means for converting the acquired music data into music waveform data to be output as music; the object characteristic data generation means for generating object characteristic data by extracting the waveform characteristic of the music waveform data obtained on the basis of the music data; the determination means for determining whether or not right characteristic data matching with the object characteristic data is recorded in the right characteristic data record section; and the record means for recording a determination result of the determination means in the determination result record section.

As a result, since the right characteristic data generated on the basis of the waveform characteristic of the music waveform data is used, it is possible to keep a record concerning reproduction based on a right and reproduction not based on a right regardless of a format of music data.

(31) to (33) Music reproduction management system according to the present invention includes: the management device; and the music reproduction device which can communicate with the management device; in which the management device further includes the right characteristic data acquisition means for acquiring right characteristic data with regard to music data as a purchase request object in response to a purchase request from the music reproduction device, and the transmitting means for transmitting the right characteristic data to the music reproduction device, and the music reproduction device has the right characteristic data record section, the music data acquisition means, the reproduction means, the object characteristic data generation means, the determination means, and the control means and further includes the reception record means for receiving the right characteristic data from the management device and for recording the right characteristic data in the right characteristic data record section.

As a result, it is possible to acquire the right characteristic data from the management device and to record the right characteristic data in the music reproduction device.

(34) to (36) Music reproduction management system according to the present invention includes: the management device; and the music reproduction device which can communicate with the management device; in which the management device has the right characteristic data record section, right characteristic data of each user of the music reproduction device is recorded in the right characteristic data record section, the music reproduction device has the music data acquisition means, the reproduction means, the object characteristic data generation means, the determination means, and the control means, and the determination means refers to the right characteristic data record section of the management device and determines whether right characteristic data matched with object characteristic data associated with the user is recorded.

As a result, after the right characteristic data of each user is recorded in the management device, it is possible to determine whether there is a right by accessing the right characteristic data from the music reproduction device.

(37) According to music reproduction management method according to the present invention, right characteristic data resulted from extracting a waveform characteristic of music waveform data obtained on the basis of music data whose right is owned by a user is recorded in the right characteristic data record section, the music data is acquired, the acquired music data is converted into music waveform data and output as music, object characteristic data is generated by extracting the waveform characteristic of the music waveform data obtained on the basis of the music data, it is determined whether or not right characteristic data matched with the object characteristic data is recorded in the right characteristic data record section, and a determination result is recorded the determination result record section.

As a result, since the right characteristic data generated on the basis of the waveform characteristic of the music waveform data is used, it is possible to keep a record concerning reproduction based on a right and reproduction not based on a right regardless of a format of music data.

(38) to (42) Music distribution management system according to the present invention includes: a first music record device; and a second music record device; in which the first music record device includes music data record section for recording music data, the right characteristic data record section for recording right characteristic data resulted from extracting a waveform characteristic of music waveform data obtained on the basis of music data whose right is owned by a user, output means for reading out and externally outputting the music data recorded in the music data record section, the object characteristic data generation means for generating object characteristic data by extracting the waveform characteristic of the music waveform data obtained on the basis of the music data, the determination means for determining whether or not right characteristic data matched with the object characteristic data is recorded in the right characteristic data record section, and the control means for changing an output state by the output means according to a determination result of the determination means, and the second music record device includes the music data record section for recording music data, the right characteristic data record section for recording right characteristic data resulted from extracting the waveform characteristic of the music waveform data obtained on the basis of music data whose right is owned by a user, input means for inputting the music data output from the first music device online or via a storage medium and for recording the music data in the music data record section, the object characteristic data generation means for generating object characteristic data by extracting the waveform characteristic of the music waveform data obtained on the basis of the music data, the determination means for determining whether or not right characteristic data matched with the object characteristic data is recorded in the right characteristic data record section, and the control means for changing an input state by the input means according to a determination result of the determination means.

As a result, since the right characteristic data generated on the basis of the waveform characteristic of the music waveform data is used, it is possible to manage transfer and transmission of music data based on a right regardless of a format of music data.

(42) Music distribution management method according to the present invention is music distribution management method for managing distribution of music data including the first music record device and the second music record device, in which the first music record device records music data in the music data record section, records right characteristic data resulted from extracting a waveform characteristic of music waveform data obtained on the basis of music data whose right is owned by a user in the right characteristic data record section, reads out and externally outputs the music data recorded in the music data record section, generates object characteristic data by extracting the waveform characteristic of the music waveform data obtained on the basis of the music data, determines whether or not right characteristic data matched with the object characteristic data is recorded in the right characteristic data record section, and changes an output state by the output means according to a determination result, and the second music record device records music data in the music data record section, records right characteristic data resulted from extracting a waveform characteristic of music waveform data obtained on the basis of music data whose right is owned by a user in the right characteristic data record section, inputs the music data output from the first music device online or via a storage medium, generates object characteristic data by extracting the waveform characteristic of the music waveform data obtained on the basis of the music data, determines whether or not right characteristic data matched with the object characteristic data is recorded in the right characteristic data record section, and changes an input state by the input means according to a determination result.

As a result, since the right characteristic data generated on the basis of the waveform characteristic of the music waveform data is used, it is possible to manage transfer and transmission of music data based on a right regardless of a format of music data.

In the present invention, the "right characteristic data record section" refers to a medium which records right characteristic data regardless of a fixed type or a portable type. In the embodiment, a hard disk 74 is the right characteristic data record section.

The "music data acquisition means" is a concept including receiving means for acquiring music data online and an interface for reading out music data from a storage medium. In the embodiment, a step S41 is the music data acquisition means. Further, "music data" is a concept including not only data reproducible as music by decoding or by expanding the data but also data reproducible without decoding or without expanding the data.

The "reproduction means" is a method of reproducing music data. In the embodiment, conversion means 16 and a sound output section 18 are the reproduction means.

In the embodiment, a step S33 is the "object characteristic data generation means."

In the embodiment, a step S36 is the "determination means."

In the embodiment, steps S37 and S40 are the "control means."

The "transmitting means of the key issuing server device" is a concept including not only means for directly transmitting right characteristic data to the music reproduction terminal device but also means for transmitting right characteristic data to the music reproduction device via a contents server device or the like.

A "program" is a concept including not only a program directly executable by a CPU but also a program of a source format, a compressed program, an encoded program, and so forth.

**Embodiments for Carrying out the Invention**

1. Basic constitution

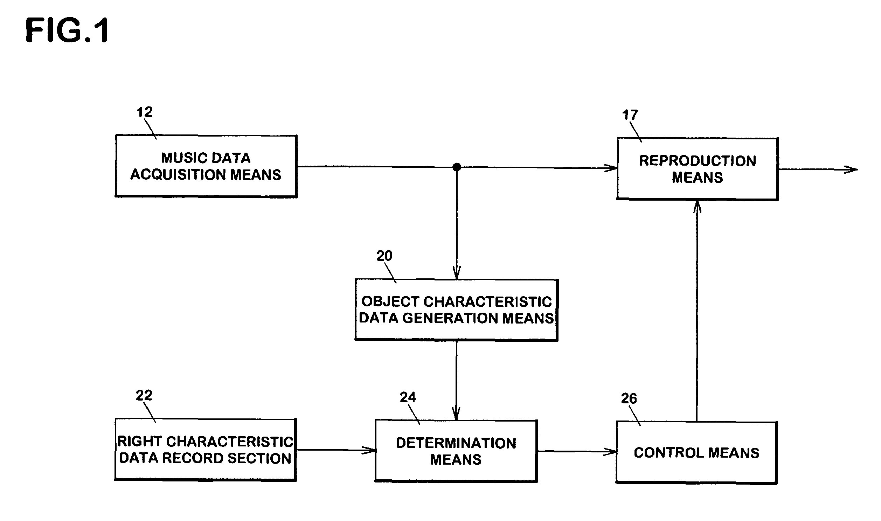

FIG. 1 shows a whole constitution of music reproduction management system according to an embodiment of the present invention. A right characteristic data record section 22 records right characteristic data resulted from extracting a waveform characteristic of music waveform data whose right is owned by a user. If the right characteristic data is not owned, reproduction of music data is restricted in this system as described below. Further, since the right characteristic data results from extracting the waveform characteristic of music, the same music can be recognized regardless of a format of the music data. The right characteristic data record section 22 may be constructed not only with a fixed type storage medium such as a hard disk but also with a removable portable storage medium such as a memory card and a USB memory.

Music data acquisition means 12 is means for acquiring music data as a reproduction object. The music data acquisition means 12 may acquire music data over a network such as the Internet or may read music data recorded in the portable storage medium. Further, the music data acquisition means 12 may temporarily record the acquired music data and send the recorded music data to reproduction means 17 or may send the acquired data to the reproduction means 17 straight without recording the acquired data.

The reproduction means 17 reproduces music waveform data from music data and outputs as music.

Object characteristic data generation means 20 generates object characteristic data by extracting a waveform characteristic of music waveform data obtained on the basis of music data. The object characteristic data generation means 20 may perform conversion into the music waveform data before extracting the waveform characteristic or may obtain the music waveform data from the reproduction means 17 before extracting the waveform characteristic.

Determination means 24 determines whether or not right characteristic data matched with the object characteristic data is recorded in the right characteristic data record section 22. A determination result is given to control means 26.

The control means 26 receives the determination result and controls a reproduction state of the reproduction means 17. For example, if the determination result is negative, reproduction of music data is not allowed, or reproduction of only a part of the music data is allowed. If the determination result is positive, reproduction of the music data is allowed.

As described above, whether or not reproduction of music data is allowed can be controlled depending on whether or not a user owns right characteristic data.

2. First embodiment

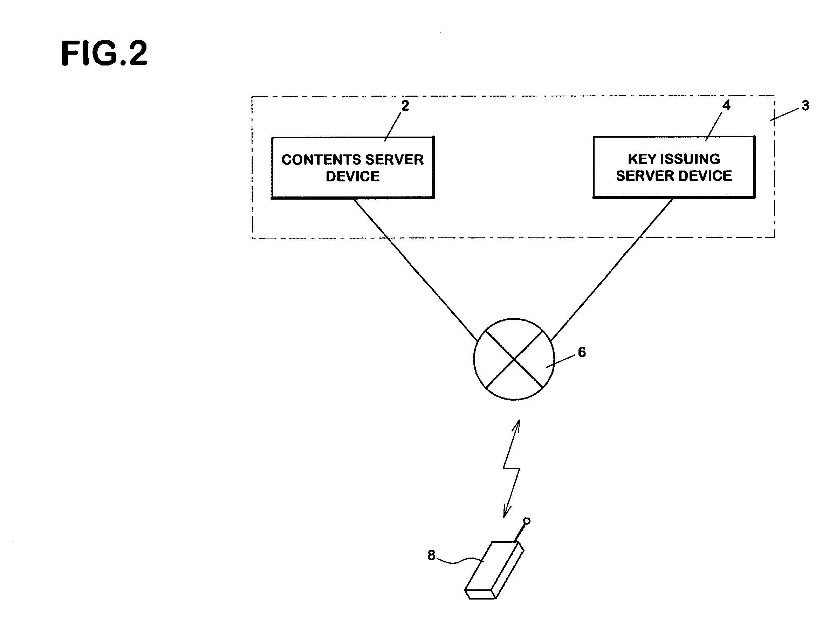

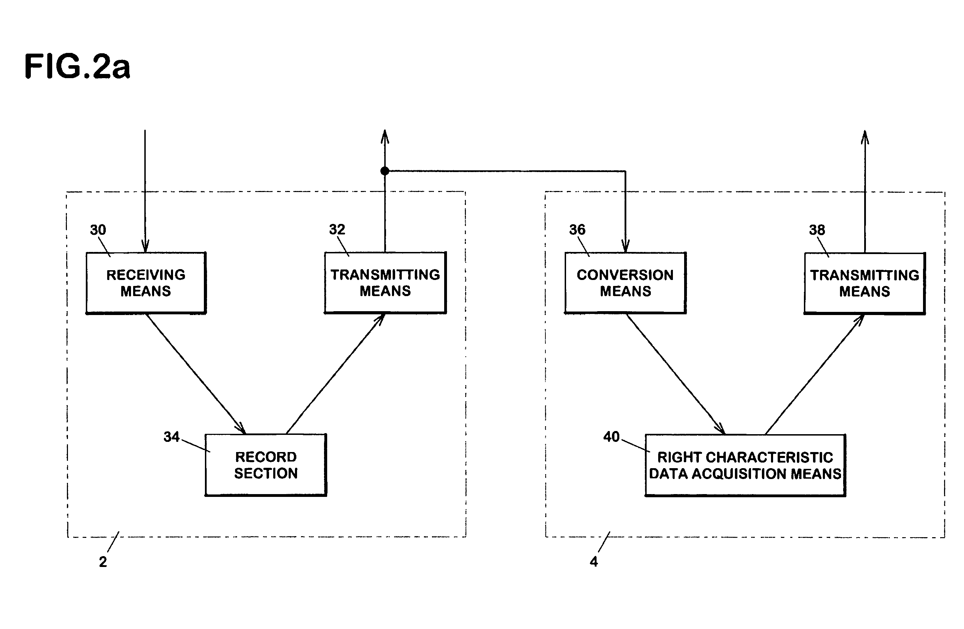

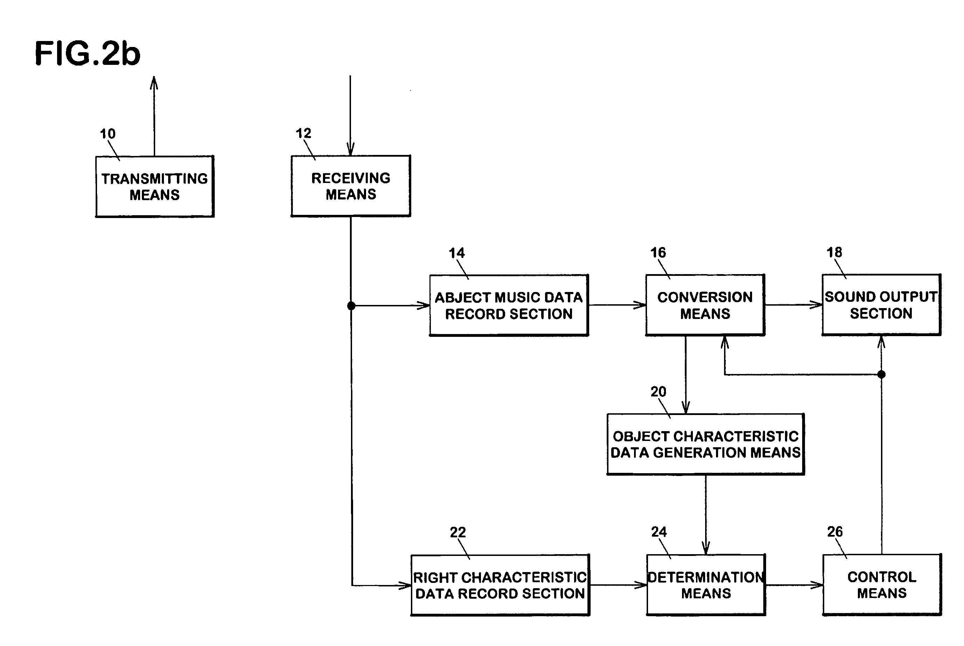

FIG. 2 shows a whole constitution of music reproduction management system according to an embodiment of the present invention. In the embodiment, a management device 3 is constituted by a contents server device 2 and a key issuing server device 4.

A mobile phone 8 having music reproduction function is connected to the contents server device 2 over the Internet 6 according to an instruction of a user. Moreover, a download request for music contents (music data) in a format such as MP3 is transmitted. When receiving the download request, the contents server device 2 transmits the requested music contents to the mobile phone 8. The mobile phone 8 records the music contents.

At the same time with this, the contents server device 2 transmits the music contents to the key issuing server device 4. The key issuing server device 4 generates characteristic data (right characteristic data) indicating a characteristic of waveform music data of the received music contents. The key issuing server device 4 transmits the generated right characteristic data to the mobile phone 8. The mobile phone 8 records the right characteristic data.

When the user operates the mobile phone 8 to give a reproduction instruction for reproducing the downloaded music contents, the mobile phone 8 performs reproduction by converting the music contents into waveform music data. Here, the mobile phone 8 generates characteristic data indicating a characteristic of the converted waveform music data (object characteristic data). Furthermore, it is determined whether or not right characteristic data matched with the object characteristic data is recorded. If the right characteristic data is not recorded, the mobile phone 8 discontinues reproduction. If the right characteristic data is recorded, the mobile phone 8 continues reproduction. Thus, only the mobile phone 8 having recorded the right characteristic data can reproduce the music contents.

As shown in FIG. 2, the user acquires the music contents from the contents server 2. However, reproduction can be performed if the right characteristic data concerning the music is owned even when the music contents is obtained by another route. For example, the music contents may be transmitted from a mobile phone of a friend. Further, since the right characteristic data and the object characteristic data result from extracting a characteristic of the waveform music data, common right characteristic data can be used regardless of a format of the music contents (MP3, ATRAC, AAC, and so forth).

FIG. 2a shows a function block diagram of the contents server device 2 and a function block diagram of the key issuing server device 4. FIG. 2b shows a function block diagram of the mobile phone device 8. In FIG. 2b, transmitting means 10 of the mobile phone device 8 transmits a download request to the contents server device 2. In FIG. 2a, receiving means 30 of the contents server device 2 receives a contents request. Transmitting means 32 reads out the requested music data (music contents) from a record section 34 and transmits the requested music data to the mobile phone device 8 and the key issuing server device 4. Receiving means 12 of the mobile phone device 8 receives the music data. The received music data is recorded in an object music data record section 14 (see FIG. 2b).

On the other hand, when receiving the music data, the key issuing server device 4 converts the music data into waveform music data in conversion means 36(see FIG. 2a). Right characteristic data acquisition means 40 extracts a waveform characteristic of the waveform music data as right characteristic data. Right characteristic data having been generated and recorded beforehand with an ID of the music data (a title or the like) may be read out and acquired. In this case, it is only necessary that the ID of the music data is transmitted from the contents server device 2. Transmitting means 38 transmits the right characteristic data to the mobile phone device 8.

The receiving means 12 of the mobile phone device 8 receives the right characteristic data (see FIG. 2b). The right characteristic data is recorded in the right characteristic data record section 22.

When a reproduction instruction concerning the music data is given by the user, the conversion means 16 reads out the music data from the object music data record section 14 and converts the music data into waveform music data. The sound output section 18 outputs the waveform music data as a sound.

On the other hand, when receiving the waveform music data from the conversion means 16, the object characteristic data generation means 20 extracts a waveform characteristic of the music waveform data and generates object characteristic data. The determination means 24 determines whether or not right characteristic data matched with the object characteristic data is recorded in the right characteristic data record section 22. If the right characteristic data matched with the object characteristic data is not found, the control means 26 controls the conversion means 16 or the sound output section 18 (or both) in order to discontinue reproduction. If the right characteristic data matched with the object characteristic data is found, the control means 26 continues reproduction.

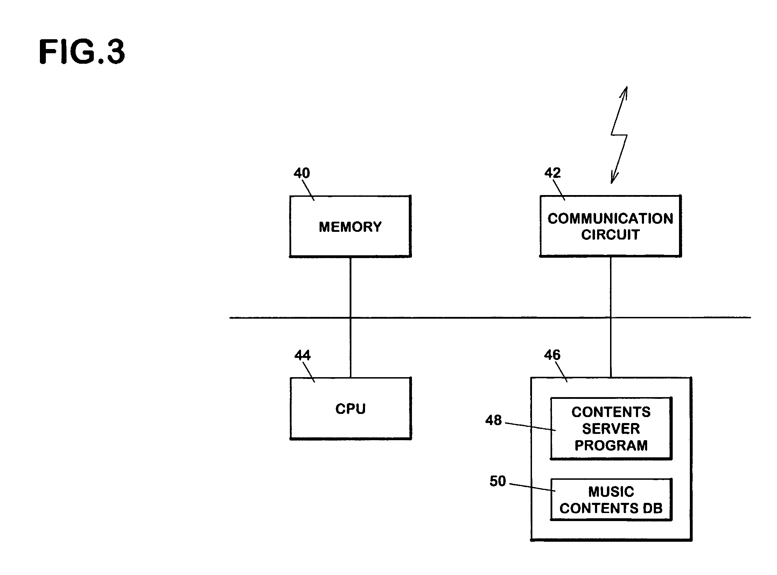

FIG. 3 shows a hardware configuration of the contents server device 2. A memory 40, a communication circuit 42, and a hard disk 46 are connected to a CPU 44. A contents server program 48 and music contents database 50 are recorded on the hard disk 46. The music contents database 5 records a plurality of encoded music data with names of music. The music contents database 50 may be provided on a different computer. The communication circuit 42 is a circuit for a connection to the Internet 6.

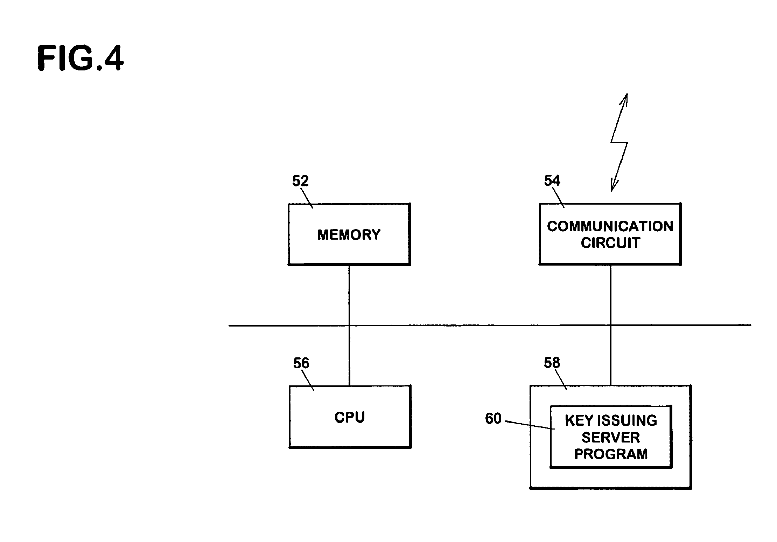

FIG. 4 shows a hardware configuration of the key issuing server device 4. A memory 52, a communication circuit 54, and a hard disk 58 are connected to a CPU 56. A key issuing server program 60 is recorded on the hard disk 58. The communication circuit 54 is a circuit for a connection to the Internet 6.

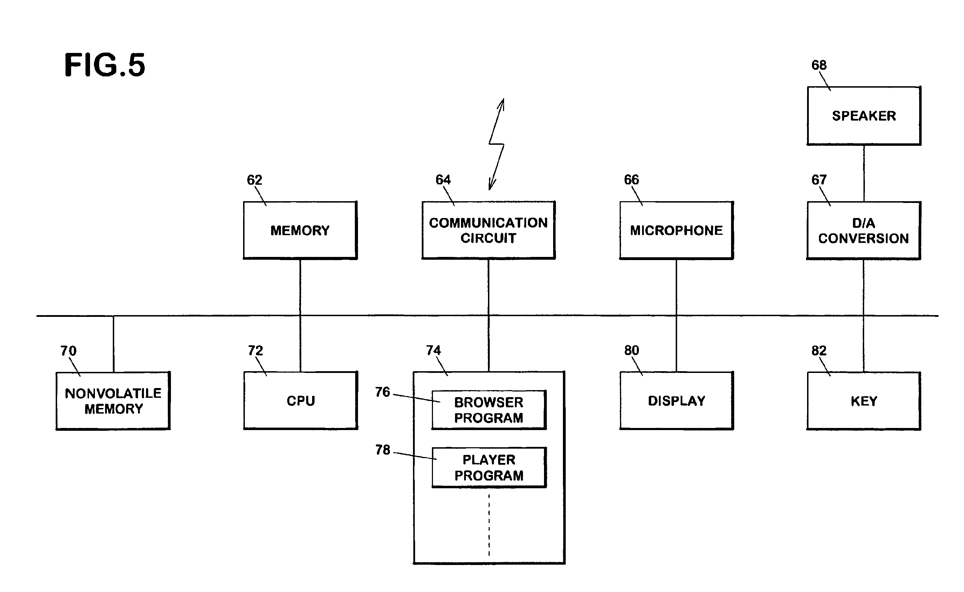

FIG. 5 shows a hardware configuration of the mobile phone device 8. A memory 62, a communication circuit 64, a microphone 66, a D/A converter 67, a nonvolatile memory 70, and a rewritable ROM 74, a display 80, and a key 82 are connected to a CPU 72. A speaker 68 is connected to the D/A converter 67. A functional part in relation to a telephone call is omitted. In the embodiment, a detachable portable rewritable memory is used for the mobile phone device 8 as the nonvolatile memory 70. Needless to say, a rewritable memory contained in the mobile phone device 8 may be used. The communication circuit 64 is a circuit for a connection to the Internet 6 via a telephone line. A browser program 76 and a player program 78 are recorded in the rewritable ROM 74. The browser program 76 is a program for acquiring information from the contents server device 2 and the key issuing server device 4. In the embodiment, the browser program 76 not only shows contents of the server device but also has a function for downloading data of the server device. The player program 78 is a program for reproducing music data.

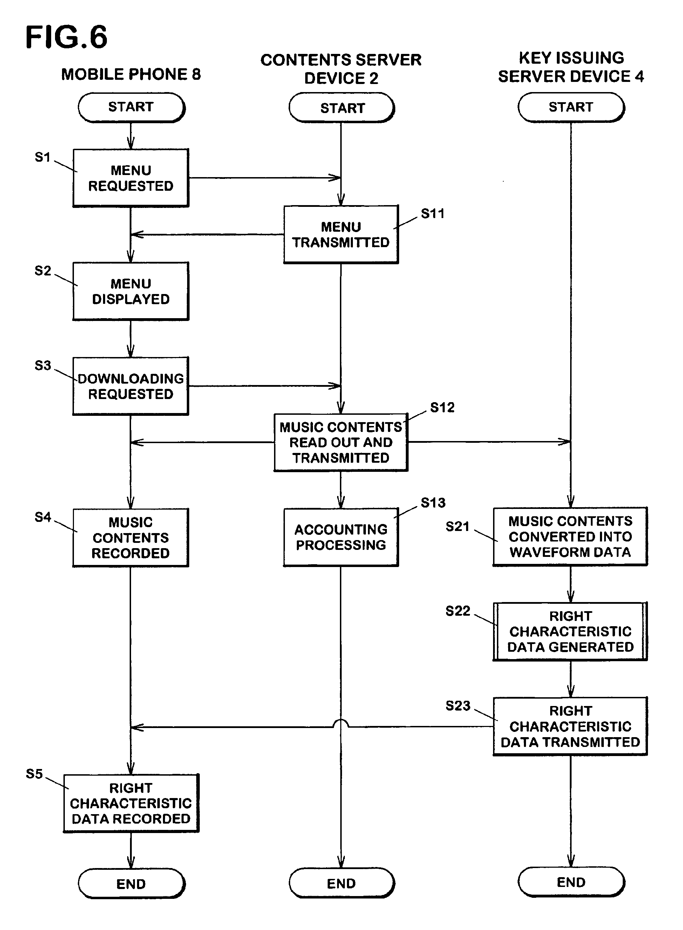

FIG. 6 shows a flow chart of a process by the mobile phone device 8 downloading the encoded music data from the contents server device 2. The left side shows the browser program 76 of the mobile phone device 8. The center part shows the contents server program 48 of the contents server device 2. The right side shows the key issuing server program 60 of the key issuing server device 4.

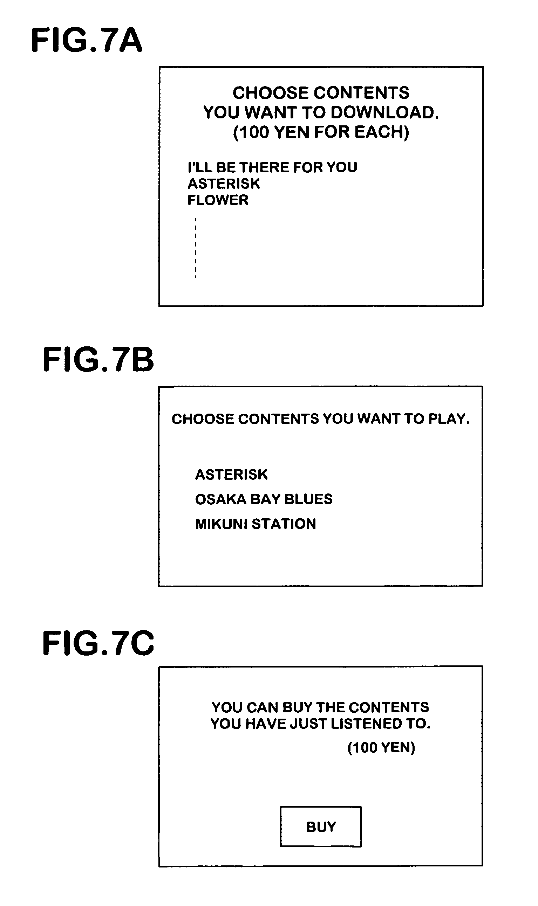

In a step S1, the CPU 72 of the mobile phone device 8 accesses the contents server device 2 via the communication circuit 64 and requests a menu page. Following this, the CPU 44 of the contents server device 2 transmits a menu screen shown in FIG. 7A (step S11) . The CPU 72 of the mobile phone device 8 displays the menu screen on the display 80 (step S2). Music titles such as "I'll be there...," "Asterisk," and "Flower" are shown in an example in FIG. 7A.

While watching the display on the display 80, a user of the mobile phone device 8 operates the key 82 and selects a desired music (clicks a decision button). Following this, the CPU 72 of the mobile phone device 8 transmits a download request for the selected music to the contents server device 2 (step S3). An ID which identifies the music or a location in the music contents DB 50 in which the music is recorded is included in the download request.

When receiving the download request, the CPU 44 of the contents server device 2 reads out the requested music from the music contents DB 50 (step S12). Encoded music data (MP3 or the like) of each music is recorded in the music contents DB 50. The CPU 44 transmits the read out encoded music data to the mobile phone device 8 and the key issuing server device 4 (step S12). Here, the contents server device 2 transmits a telephone number and a mail address of the mobile phone device 8 to the key issuing server device 4 at the same time. Moreover, the CPU 44 performs accounting processing for the user (step S13). For example, the CPU 44 contacts a server of a carrier and performs billing processing.

When receiving the encoded music data, the CPU 72 of the mobile phone device 8 records the encoded music data in the nonvolatile memory 70 (step S4).

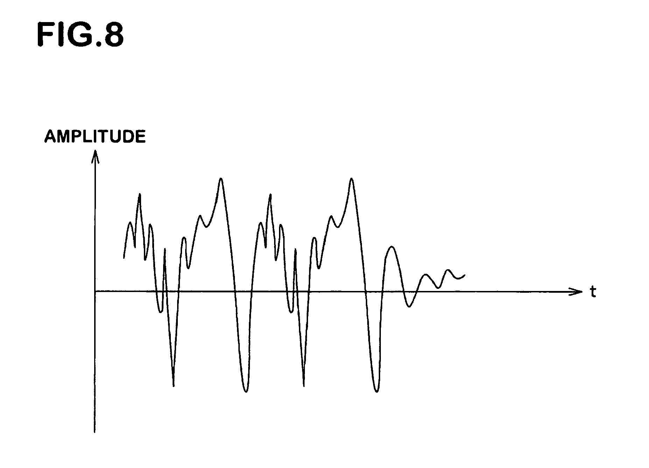

On the other hand, when receiving the encoded music data, the CPU 56 of the key issuing server device 4 converts the encoded music data into waveform music data (step S21). Here, conversion into the waveform music data is performed only concerning a predefined part and is temporarily recorded in the memory 52. In the embodiment, approximately one second duration from a start of music is converted into waveform music data. In the embodiment, waveform music data is data in which amplitude of music is arranged on a time axis as schematically shown in FIG. 8 and with which the music can be reproduced by giving the music data to a speaker after an analog conversion. In the embodiment, digital data is used as waveform music data. However, analog data may be used.

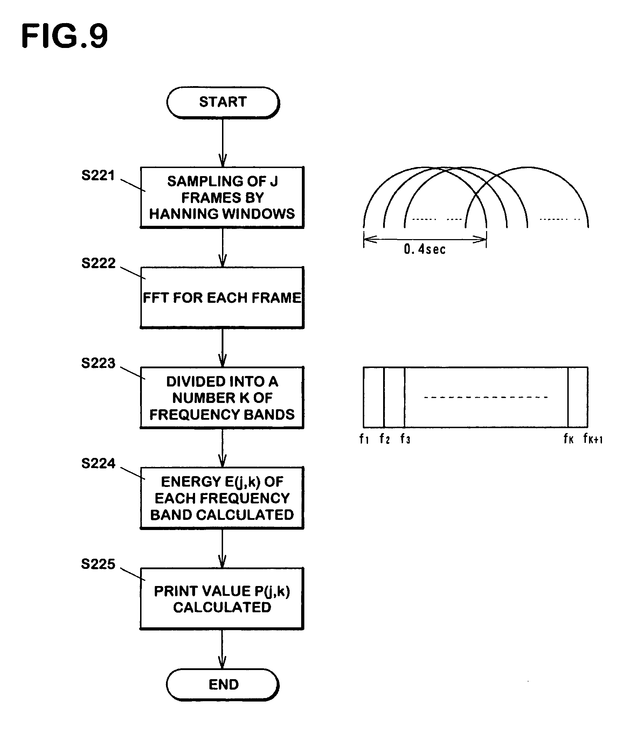

The CPU 56 extracts a waveform characteristic of the waveform music data and generates right characteristic data (step S22). In the embodiment, the waveform characteristic of the waveform music data is extracted as illustrated in a flow chart in FIG. 9.

The CPU 56 samples the waveform music data recorded in a memory 56 by a Hanning window (step S221). In the embodiment, a number of J of frames is sampled (frames 1 to J). Each frame is overlapped with each other considerably. For example, an overlap coefficient is about 31/32.

The CPU 56 performs Fourier transform on each frame from the frames 1 to J. In the embodiment, fast discrete Fourier transform (FFT) is used (step S222). Further, a phase element is not used in following processes, but only a strength element is used.

The CPU 56 divides a result of FFT of each frame into a number of K of frequency bands (step S23) . Each frequency band is not overlapped with each other in this division into frequency bands. In the embodiment, 33 frequency bands are made by a logarithmic division in a frequency range from 300 Hz to 3000 Hz. Specifically, a band frequency width is two and a half times as large as that of a frequency band immediately below.

After this, the CPU 56 calculates a sum of energy of spectra with respect to each frequency band of each frame (step S224). As a result, a total energy E of each frequency band in frequency bands 1 to M is calculated.

Following this, the CPU 56 calculates a print value P(j,k) by an expression below (step S225), where j is a frame number and k is a frequency band number.

[Expression 1]

$$P(j,k)= \begin{cases} 1 \text{ if } E(j,k)-E(j,k+1)-(E(j-1,k)-E(j-1,k+1))>0 \\ \\ 0 \text{ if } E(j,k)-E(j,k+1)-(E(j-1,k)-E(j-1,k+1))\leq 0 \end{cases}$$

As described above, a number of J×K of print values can be obtained. In the embodiment, the print numbers are right characteristic data.

As shown in FIG. 6, the CPU 56 transmits the generated right characteristic data to the mobile phone 8 (step S23). The CPU 72 of the mobile phone device 8 records the received right characteristic data in the rewritable ROM 74 (step S5). This process may be automatically performed by a plug-in program of a browser or may be achieved by an automatic saving function of mail software. Further, a user may perform an operation to save the right characteristic data when receiving a mail.

As described above, the encoded music data and the right characteristic data thereof are recorded in the mobile phone device 8. When the processing above is repeated a plurality of times, a plurality of the encoded music data and the right characteristic data are recorded.

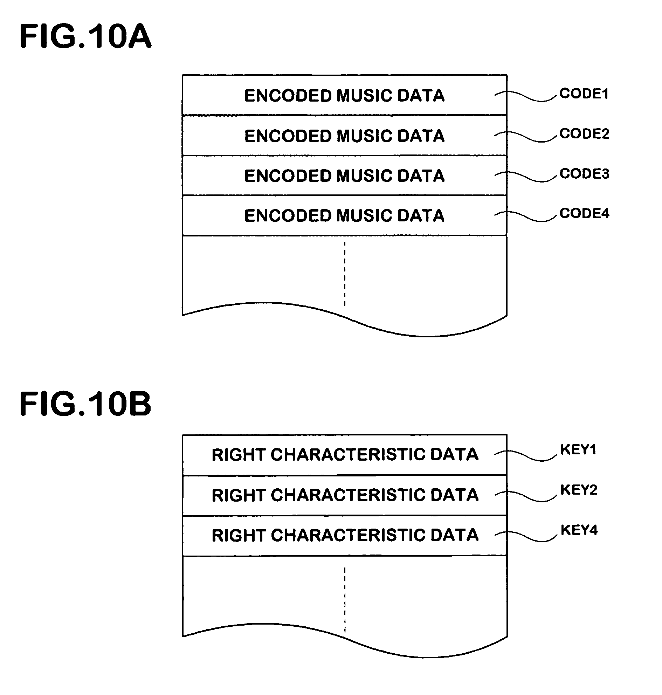

FIG. 10A shows encoded music data CODE 1, CODE 2, CODE 3, CODE 4,... recorded in the nonvolatile memory 70 of the mobile phone device 8. FIG. 10B shows right characteristic data KEY 1, KEY 2, KEY 4,... recorded in the rewritable ROM 74 of the mobile phone device 8. Here, the right characteristic data KEY 1, KEY 2, KEY 3, and KEY 4 are the right characteristic data for the encoded music data CODE 1, CODE 2, CODE 3, and CODE 4 respectively. As shown in FIG. 10B, the right characteristic data KEY 3 corresponding to the encoded music data CODE 3 is not recorded.

In the embodiment, encoded music data can be obtained not only from the contents server device 2. For example, encoded music data downloaded from the contents server device 2 by another user can be duplicated in the nonvolatile memory 70 or can be transmitted. Further, encoded music data can be duplicated not from the contents server device 2 but from a medium such as an MD.

The encoded music data CODE 3 in FIG. 10A is obtained as described above. Therefore, the corresponding right characteristic data KEY 4 is not recorded. As a result, the encoded music data CODE 3 cannot be reproduced practically.

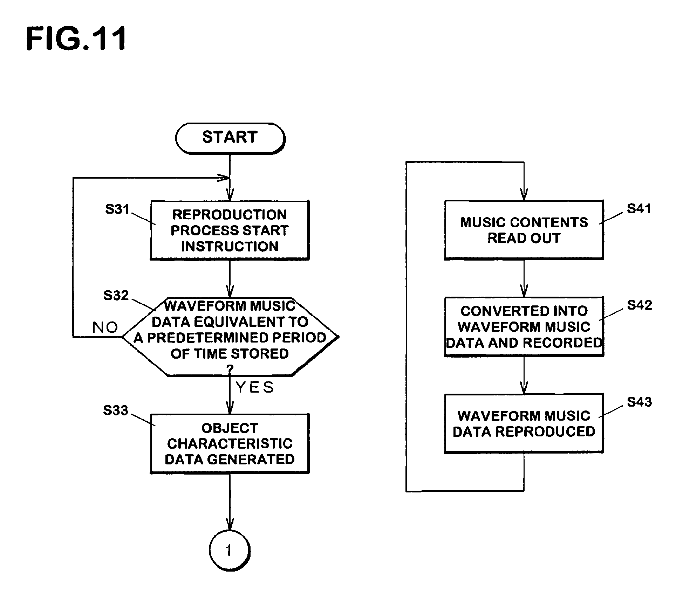

FIG. 11 shows a flow chart of the player program 78 of the mobile phone device 8. When a user operates the key 82 to select encoded music data and to input a reproduction instruction (see FIG. 7B), the CPU 72 gives a reproduction process start instruction to a reproduction processing module (step S31). For example, the encoded music data CODE 2 is selected. Following this, the CPU 72 parallely executes the step S41 and steps S42 and S43 of the reproduction processing module. In the step S41, the selected encoded music data CODE 2 recorded in the nonvolatile memory 70 is read out from a start (step S41). After this, the read out encoded music data CODE 2 is converted into waveform music data (step S42). Here, the waveform music data is recorded in the memory 62. Following this, the CPU 72 outputs the waveform music data to the D/A converter 67 (step S43). As a result, the waveform music data after an analog conversion is given to the speaker 68, and music is output. When a series of processing is ended, another processing in which a next part of the encoded music data is read out, converted, and output is repeated.

The CPU 72 determines whether or not waveform music data of a length equivalent to an amount used for generating the right characteristic data is recorded in the memory 62 in parallel with reproduction processing described above (step S32). When the waveform music data of a predetermined length is recorded in the memory 62, the CPU 72 generates object characteristic data expressing a waveform characteristic of the waveform music data (step S33). A process for generating the object characteristic data is the same as that in FIG. 9.

After this, the CPU 72 reads out the first right characteristic data KEY 1 from the rewritable ROM 74 (step S34). An error margin between the right characteristic data KEY 1 and the object characteristic data generated as described above is obtained. For example, the right characteristic data KEY 1 is expressed as P(j,k) and the object characteristic data is expressed as P'(j,k), and j is varied from 1 to J and k is varied from 1 to K. Thus, the error margin between corresponding P(j, k) and P'(j, k) (a number of P which disagrees with P') is obtained (step S35). If P(j, k) and P'(j,k) are completely the same, the error margin is "0 . " If P(j,k) and P'(j,k) are completely different, the error margin is "JxK."

After this, the CPU 72 determines whether or not the error margin is equal to a predefined value or less (step S36). If the error margin is equal to the predefined value or less, it is determined that P(j,k) and P'(j,k) are matched with each other (in other words, it is determined that a right is owned with regard to the music). Consequently, reproduction processing is continued (step S37).

If the error margin exceeds the predefined value, it is determined that P(j,k) and P'(j,k) are not matched with each other, and the process goes to a step S38. In the step S38, it is determined whether or not processing is executed with regard to all right characteristic data recorded in the rewritable ROM 74. If there is right characteristic data not processed yet, next right characteristic data is read out from the rewritable ROM 74 (step S39), and the step S35 and following steps are repeatedly executed.

If there is nothing that is matched with the object right characteristic data even when comparison is performed with regard to all the right characteristic data recorded in the rewritable ROM 74, the CPU 72 discontinues reproduction by the reproduction processing module (step S40) .

In this example, the encoded music data CODE 2 is reproduced. Therefore, the right characteristic data KEY 1 recorded in a first place of the nonvolatile ROM 74 is not matched, but the right characteristic data KEY 2 in a second place is matched. As a result, the reproduction is continued. If an object of the reproduction instruction is the encoded music data CODE 3, because right characteristic data matched with the CODE 3 is not recorded, the reproduction is discontinued.

Following this, the CPU 72 starts the browser program 76 and establishes a connection with the contents server device 2 (steps S41 and S42). As a result, a user who wants to completely reproduce the music can buy the right characteristic data by sending a request to the contents server device 2 (see FIG. 7C). A connection may be established not with the contents server device 2 but with the key issuing server device 4 directly.

Here, the right characteristic data is recorded in the nonvolatile ROM. However, the right characteristic data may be recorded in a potable storage medium.

In the embodiment, the mobile phone device 8 is the reproduction device. However, the music reproduction device such as an MP3 player may be used.

In the embodiment, the key issuing server device 4 and the contents server device 2 are different servers. However, these devices may be achieved by a single server.

In the embodiment, the encoded music data is transmitted from the contents server device 2 to the key issuing server device 4, and the key issuing server device 4 converts the encoded music data into the waveform music data to generate the right characteristic data. However, a conversion into the waveform music data may be performed in the contents server device 2, and the waveform music data may be transmitted to the key issuing server device 4 directly.

Further, the key issuing server device 4 may record right characteristic data corresponding to titles of music beforehand, and only those titles may be transmitted from the contents server device 2 in order to obtain right characteristic data.

In the embodiment, the right characteristic data is directly transmitted from the key issuing server device 4 to the mobile phone device 8. However, transmission may be performed from the key issuing server device 4 to the contents server device 2, and the right characteristic data may be sent from the contents server device 2 to the mobile phone device 8.

In the embodiment, the right characteristic data is expressed as P (j, k) and the object characteristic data is expressed as P' (j,k), and j is varied from 1 to J and k is varied from 1 to K. Thus, the error margin between corresponding P(j,k) and P'(j,k)(a number of P which disagrees with P') is obtained in order to determine matching. However, the right characteristic data and the object characteristic data may be expressed as vectors in a K×j dimensional space, and matching may be determined on the basis of an error margin of a Euclidean position in the space. Further, matching may be determined depending on a correlation between the right characteristic data and the object characteristic data.

3. Second embodiment

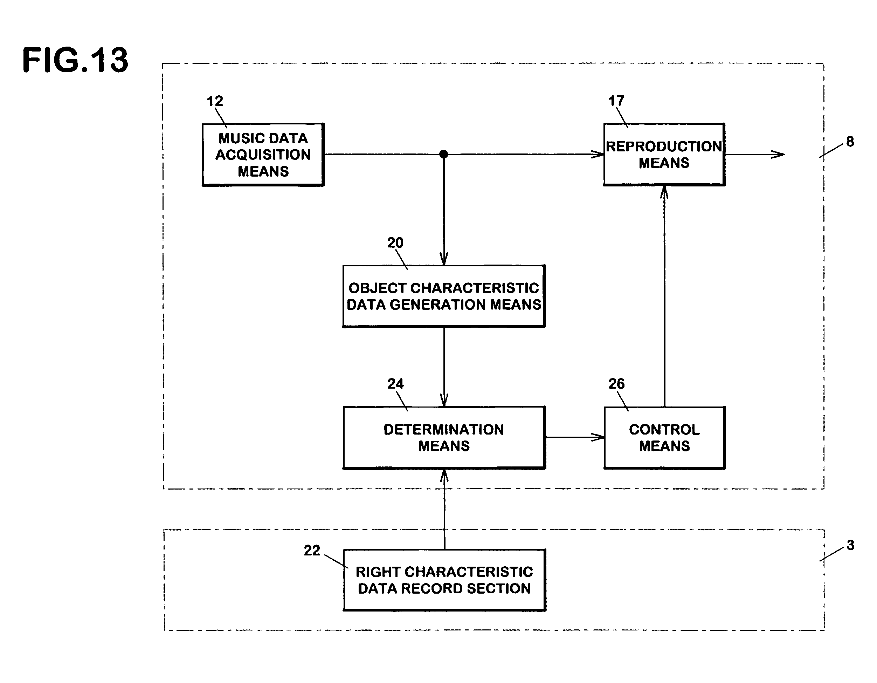

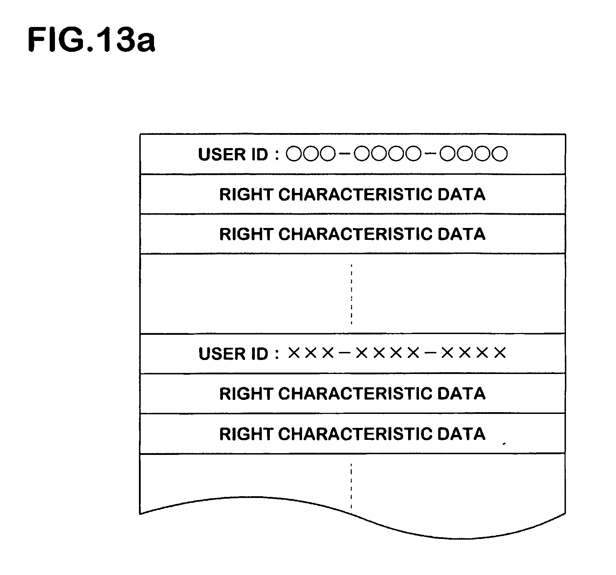

FIG. 13 shows a constitution of a second embodiment. In the first embodiment, the right characteristic data record section 22 is recorded on a side of the music reproduction device (mobile phone) 8. In the second embodiment, the right characteristic data record section 22 is provided on a side of the management device 3. The management device 3 does not transmit generated right characteristic data to the music reproduction device 8 but records the generated right characteristic data on the management device 3 itself. A user of the music reproduction device 8 can perform reproduction by selecting desired music data if the user owns a right concerning the music data.

FIG. 13a shows an example of right characteristic data recorded in the management device 3. The right characteristic data owned by the user is recorded by associating the right characteristic data with an ID of each user (a telephone number, for example).

The determination means 24 of the music reproduction device 8 transmits a user ID of the music reproduction device 8 to the management device 3 and acquires right characteristic data owned by the user in order to determine matching with object characteristic data.

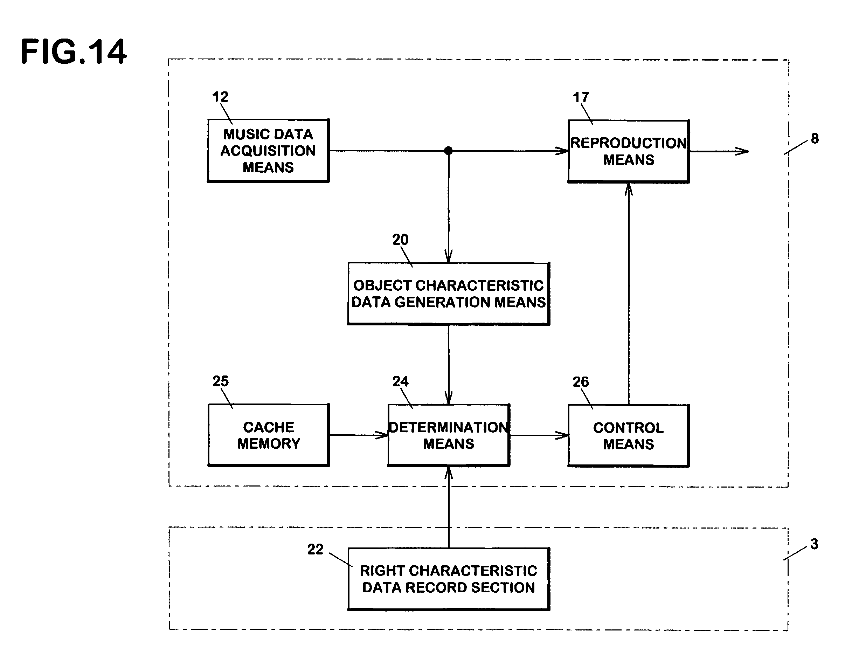

As shown in FIG. 14, right characteristic data acquired from the management device 3 may be recorded in a cache memory 25. The determination means 24 performs comparison with the right characteristic data recorded in the cache memory 25 first. If nothing is matched, the determination means 24 accesses the management device 3 and performs comparison with right characteristic data recorded in the right characteristic data record section 22. Therefore, right determination processing can be promptly performed in a case of repetitious reproduction of same music or in relation to music which is frequently reproduced. Such cache processing can be adopted in another embodiment.

Further, the management device 3 may be constituted by a mobile phone, and the music reproduction device 8 may be a car navigation device with music reproduction function. In this case, the right characteristic data record section 22 is provided in the mobile phone. Communication between the mobile phone 3 and the car navigation device may be performed by radio communication (WiFi or the like), Bluetooth, infrared rays, and the like or over the Internet. Moreover, the right characteristic data record section 22 may not be provided in the mobile phone 3, but the right characteristic data record section 22 may be provided on a server on the Internet. In this case, the car navigation device communicates with the mobile phone 3 and acquires right characteristic data from the right characteristic data record section 22 on the server via the mobile phone 3. This is effective when the car navigation device cannot be connected with the Internet and the like.

<u>4. Third embodiment</u>

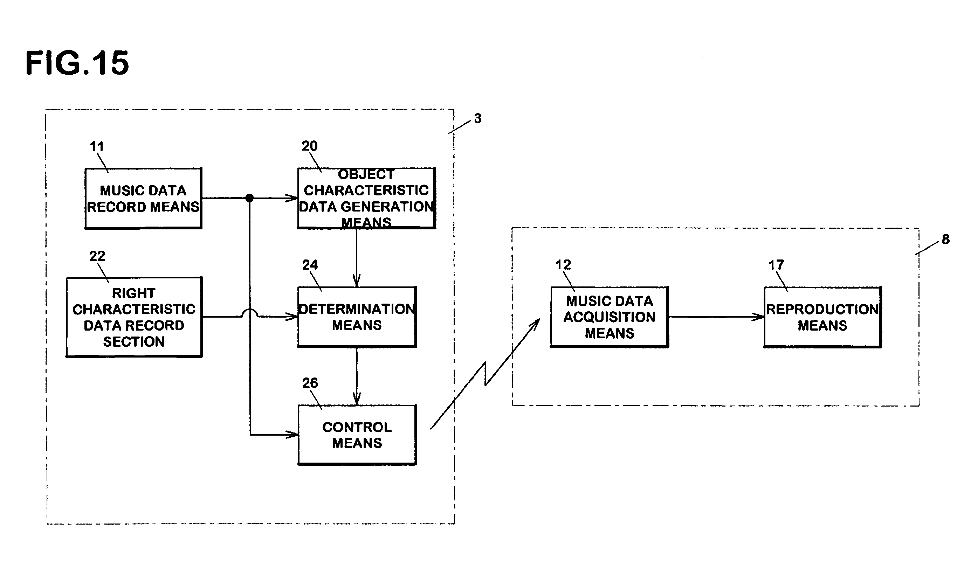

FIG. 15 shows a third embodiment. In the embodiment, the management device 3 may be constituted by a mobile phone, and the music reproduction device 8 is constituted with audio equipment or a TV set device. In the embodiment, the mobile phone as the management device 3 is operated in order to select music data to be reproduced. Thus, music is reproduced by the music reproduction device 8 on condition that a right of the music data is owned.

In the mobile phone 3, the object characteristic data generation means 20 generates object characteristic data by reading out music data from music data record section 11. The determination means 24 determines whether or not recording is made in the right characteristic data record section 22 matched with the object characteristic data. If a determination result is positive, the control means 26 reads out music data from the music data record section 11 and transmits the music data to the audio device 8. The music data acquisition means 12 of the audio device 8 receives the music data, and reproduction is performed by the reproduction means 17 in real time. On the other hand, if the determination result is negative, the control means 26 does not transmit the music data to the audio device 8.

<u>5. Fourth embodiment</u>

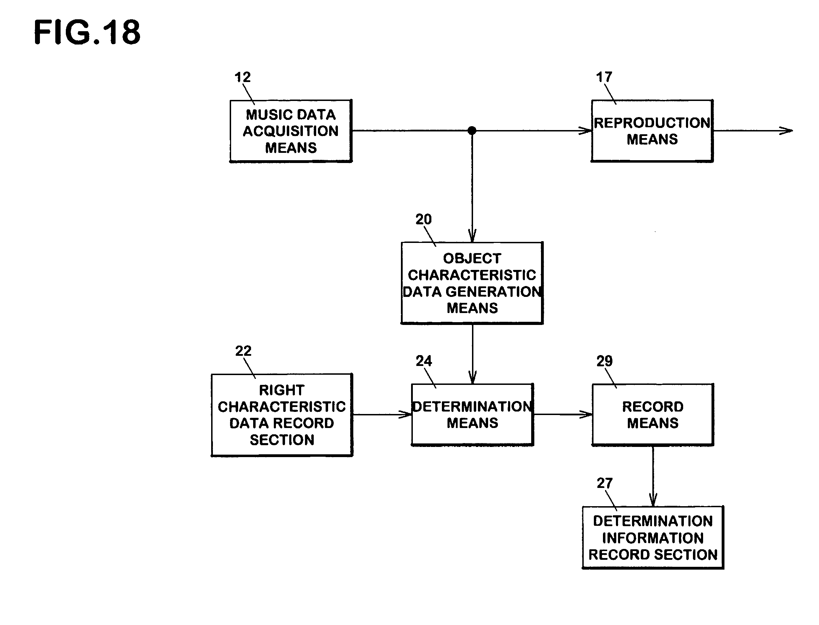

FIG. 18 shows a function block diagram of music reproduction management system according to a fourth embodiment of the present invention. FIG. 18 is different from FIG. 1 in that record means 29 is provided in place of the control means 26. When receiving a determination result of the determination means 24, the record means 29 (steps S51 and S52 described below) records the determination result in a determination information record section 27 (a nonvolatile memory or the like) . A date of reproduction, a user ID, and the like are associated with the determination result and recorded in the determination information record section 27. When determination information is recorded in the music reproduction device owned specifically by a user, it may not be necessary to record the user ID. The determination information recorded as described above can be used for a research of such as how many times the music composition has been reproduced without a right.

As for each function in FIG. 18, all the functions may be provided to the music reproduction device as illustrated from the first to the third embodiments, or a part of the functions may be provided to the management device.

Here, a case in which all the functions in FIG. 18 are provided to the music reproduction device will be described. A hardware configuration is the same as that in FIG. 5.

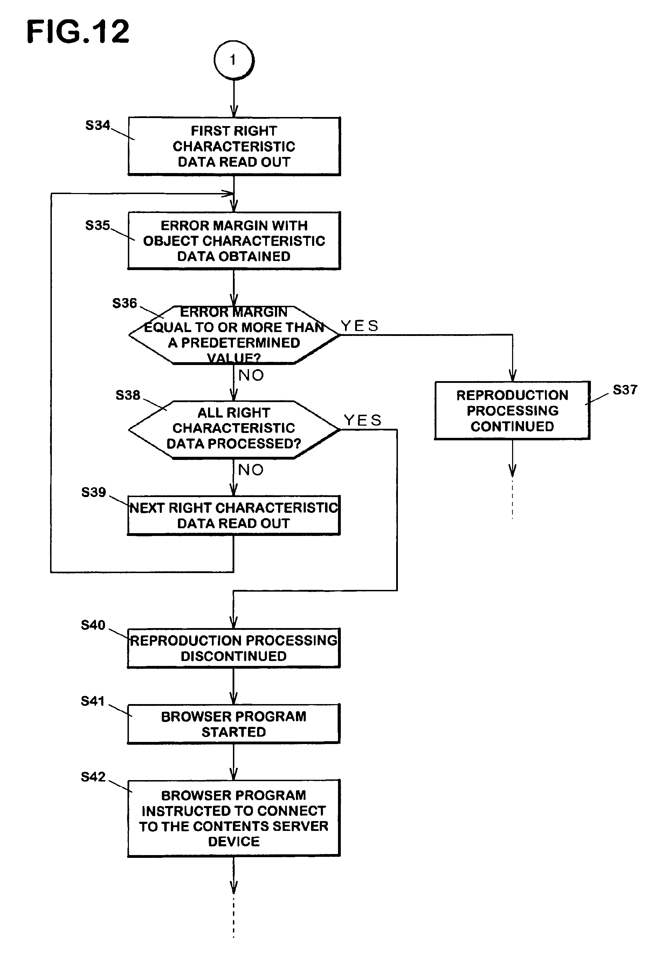

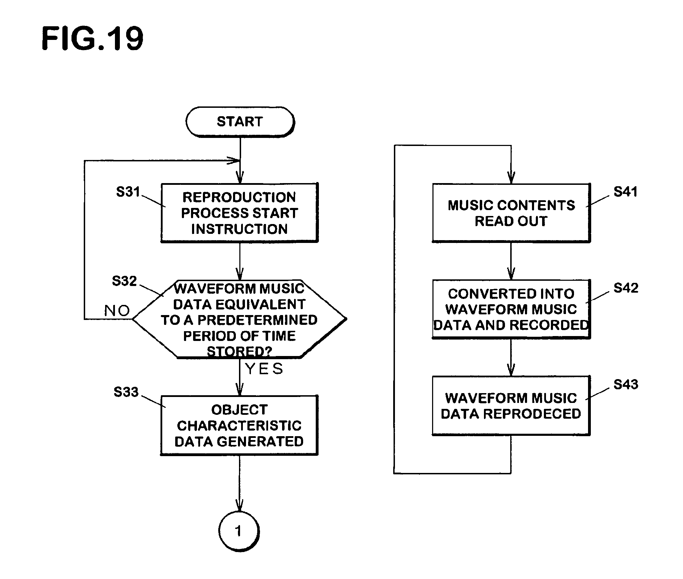

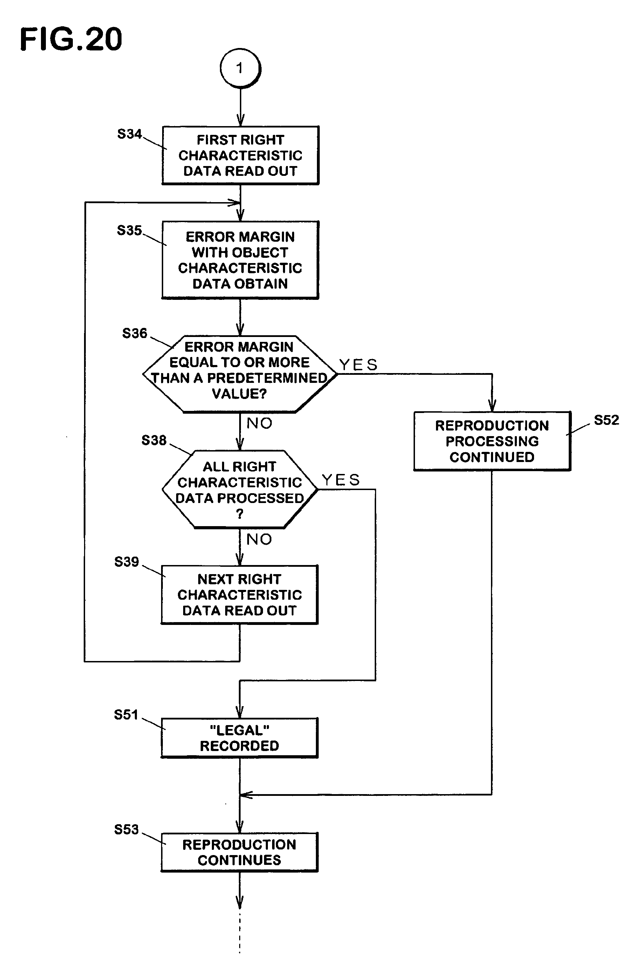

FIG. 19 and FIG. 20 show flow charts of the player program 78. the steps S51 and S52 and a step S53 are different from those in FIG. 11 and FIG. 12. Other parts are the same.

When there is no right characteristic data matched with object characteristic data of music data in reproduction, the CPU 72 records "illegal" in the nonvolatile memory 70 (determination result record section) with a date of a start of the reproduction (step S51) . On the other hand, when there is right characteristic data matched with the object characteristic data of the music data in reproduction, the CPU 72 records "legal" in the nonvolatile memory 70 with a date of a start of the reproduction (step S52).

After this, the CPU 72 continues the reproduction of the music data. In other words, a determination result is recorded in the embodiment, but reproduction is not discontinued as a result. However, since the determination result is recorded, a situation of illegal use can be understood by acquiring the determination result (this is achieved by a method in which the determination result is forcefully transmitted when the music reproduction device is connected to the Web or the like).

Reproduction control such as discontinuation of reproduction may be performed as illustrated in the first embodiment in addition to recording of the determination result.

In the embodiment, the determination result record section is provided in the music reproduction device. However, the determination result record section may be provided in the management device as illustrated in the embodiment in FIG. 13. In this case, a user ID may be recorded with a determination result. When privacy of a user is respected, and if it is only necessary to know a whole situation of illegal use, it is not necessary to record a user ID.

6. Fifth embodiment

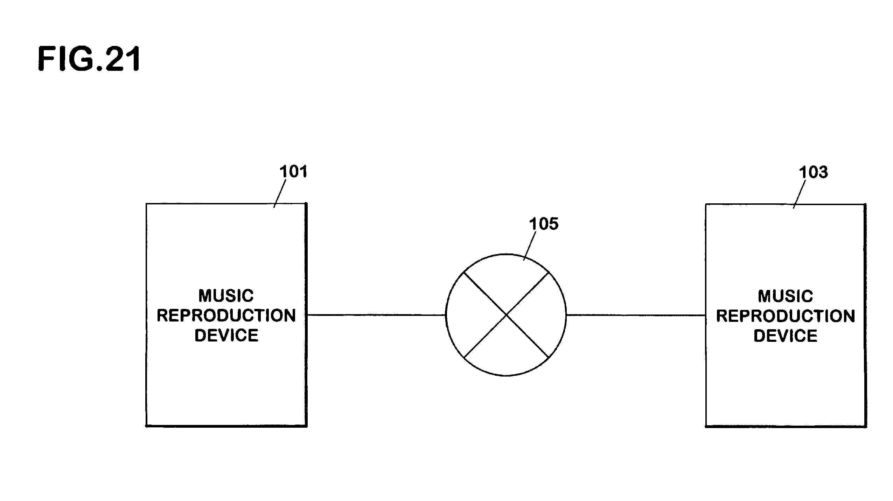

FIG. 21 shows music distribution management system according to one embodiment of the present invention. This system prohibits distribution of music data whose right is not owned. In this system, music reproduction device 101 and music reproduction device 103 are communicatively connected to each other over the Internet 105 or the like. In the embodiment, the music reproduction devices 101 and 103 have a function for reproducing music. However, the present invention can be applied if at least a function for recording music data is provided.

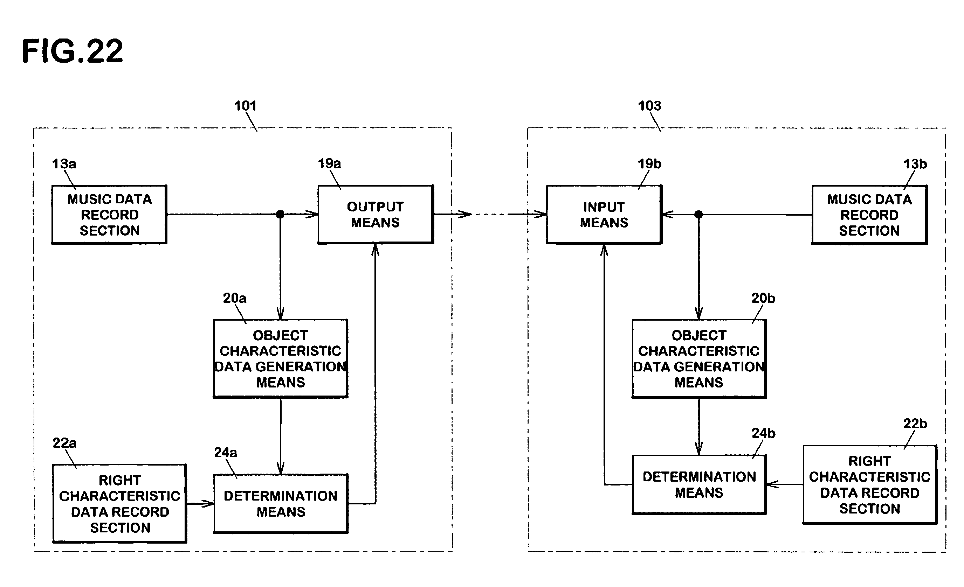

FIG. 22 shows a function block diagram of the music reproduction device 101 and the music reproduction device 103. The music reproduction device 101 has music data record section 13a, output means 19a, object characteristic data generation means 20a, determination means 24a, and a right characteristic data record section 22a. The object characteristic data generation means 20a, the determination means 24a, and the right characteristic data record section 22a are the same as the object characteristic data generation means 20, the determination means 24, and the right characteristic data record section 22 in FIG. 1.

The output means 19a reads out music data recorded in the music data record section 13a and outputs the music data to the music device 103. The object characteristic data generation means 20a generates object characteristic data with regard to the music data which the output means 19a is going to output (or has output). The determination means 24a determines whether or not right characteristic data matched with the generated object characteristic data is recorded in the right characteristic data record section 22a. If right characteristic data matched with the object characteristic data is found, the determination means 24a allows the output means 19a to output the music data. If right characteristic data matched with the object characteristic data is not found, the determination means 24a does not allow the output means 19a to output the music data.

As a result, control can be performed in order to externally output only music data whose right is owned by a sender.

The music reproduction device 103 has music data record section 13b, input means 19b, object characteristic data generation means 20b, determination means 24b, and a right characteristic data record section 22b. The object characteristic data generation means 20b, the determination means 24b, and the right characteristic data record section 22b are the same as the object characteristic data generation means 20, the determination means 24, and the right characteristic data record section 22 in FIG. 1.

When receiving the music data transmitted from the music reproduction device 101, the input means 19b records the music data in the music data record section 13b. The object characteristic data generation means 20b generates object characteristic data with regard to the music data received by the input means 19b. The determination means 24b determines whether or not right characteristic data matched with the generated object characteristic data is recorded in the right characteristic data record section 22b. If right characteristic data matched with the object characteristic data is found, the determination means 24b allows the input means 19b to record the music data in the music data record section 13b. If right characteristic data matched with the object characteristic data is not found, the determination means 24b does not allow the input means 19b to record the music data in the music data record section 13b.

As a result, control can be performed in order to receive only music data whose right is internally owned from an external source and in order to record the music data.

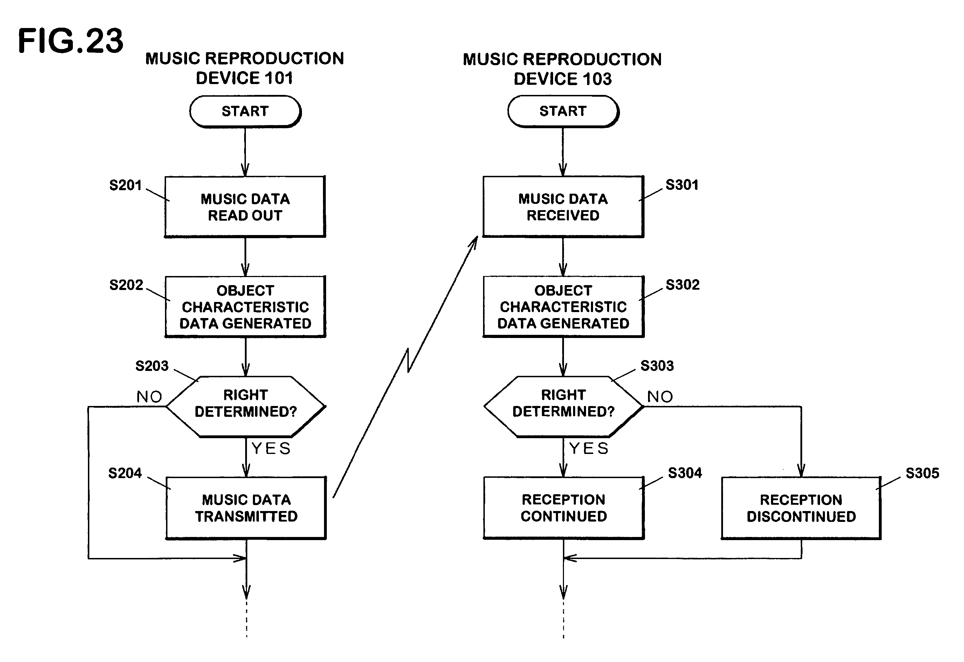

A hardware configuration of the music reproduction devices 101 and 103 according to the embodiments is the same as that in FIG. 5. Further, a control program is recorded on the hard disk 74. FIG. 23 shows a flow chart of the control program. The music reproduction device 101 which reads out and transmits music data is at the left side, and the music reproduction device 103 which receives and records music data is at the right side.

When an instruction from a user is given from the key 82, the CPU 72 of the music reproduction device 101 reads out music data recorded in the nonvolatile memory 70 (step S201). After this, the CPU 72 generates object characteristic data with regards to the read out music data (step S202). Following this, the CPU 72 determines whether or not right characteristic data matched with the generated object characteristic data is recorded in the nonvolatile memory 70 (step S203). If right characteristic data matched with the object characteristic data is not found, the CPU 72 does not transmit the music data to a counterpart thereof and discontinues processing. If right characteristic data matched with the object characteristic data is found, the CPU 72 transmits the music data to the counterpart thereof via the communication circuit 64 (step S204).

The CPU 72 of the music reproduction device 103 receives the transmitted music data via the communication circuit 64 (step S301). Following this, the CPU 72 generates object characteristic data with regards to the received music data (step S302) . The CPU 72 determines whether or not right characteristic data matched with the generated object characteristic data is recorded in the nonvolatile memory 70 (step S303). If right characteristic data matched with the object characteristic data is not found, the CPU 72 does not record the received music data in the nonvolatile memory 70 and discontinues reception (step S305). If right characteristic data matched with the object characteristic data is found, the CPU 72 records the received music data in the nonvolatile memory 70 (step S304).

In this embodiment, only when the right characteristic data is owned by both a transmitting side and a receiving side, transmission of the music data can be allowed. For example, it is possible to have a friend or the like transfer the music data in a case in which the right characteristic data is owned but the music data thereof is lost (deleted) or the like.

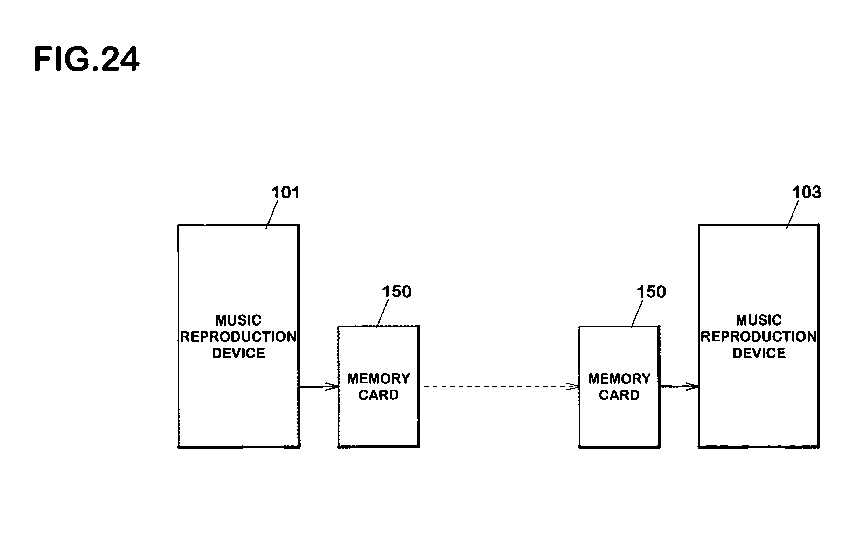

In the embodiment, the music data is transferred online. However, as shown in FIG. 24, the music data may be output from the music reproduction device 101 to the portable storage medium such as a memory card 150, and the music data may be read and recorded on a side of the music reproduction device 103. In this case, it is determined whether or not a right is owned when recording in the memory card 150 is performed, and it is determined whether or not a right is owned when reading out from the memory card 150 is performed.

In the embodiment, it is determined whether or not a right is owned both on a transmitting side and on a receiving side. However, it may be determined whether or not a right is owned on either side.

Communication between the music reproduction device 101 and the music reproduction device 103 may not be direct communication but may be communication via a server (management device). In this case, right characteristic data of the user of the music reproduction device 101 and the music reproduction device 103 may be recorded on a side of the server, and the determination means of the music reproduction device may acquire the right characteristic data and perform a determination. Further, the determination means may be provided on the side of the server. In this case, the determination means can perform control by allowing or disallowing transmission processing of the music data.

7. Other embodiments

Other embodiments which can be applied to each of the embodiments described above will be described hereinafter.

(1) In each of the embodiments, whenever the music reproduction device is about to perform reproduction, the determination means determines whether or not right characteristic data matched with object characteristic data is found. However, if once it is determined that a right is owned, an ID of music data (a title name, for example) may be recorded as right information on a side of the music reproduction device. As a result, when reproduction is requested, the control means can determine whether or not the right information is found by the ID of the music data included in the request for reproduction and can perform control. As a result, the determination means does not need to perform determination from a second time on, and thus prompt processing becomes possible.

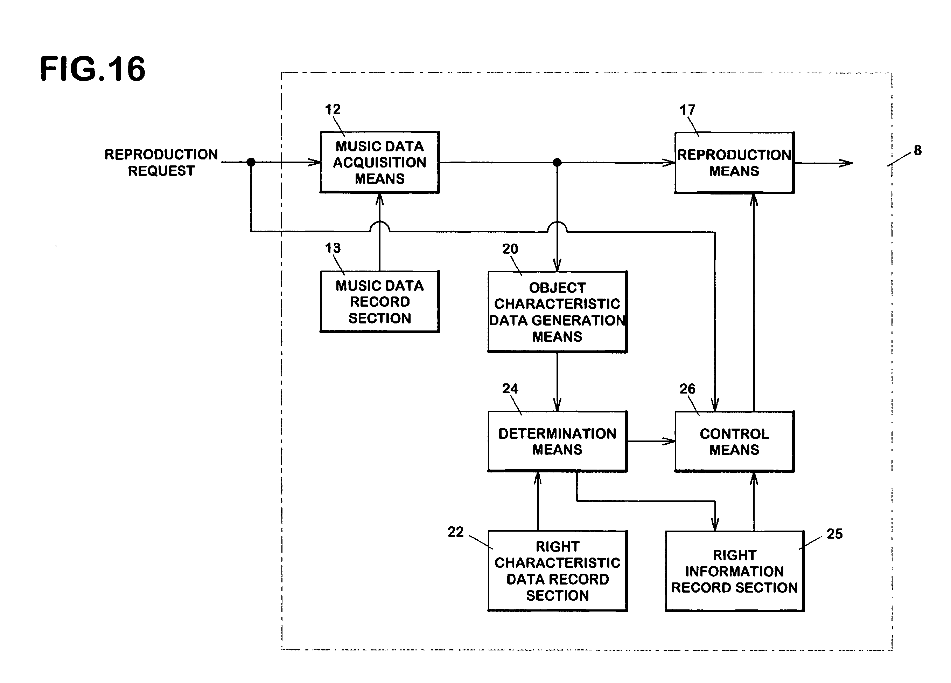

For example, if the embodiment above is applied to the first embodiment, a constitution is as shown in FIG. 16. The music data acquisition means 12 acquires the requested music data from music data record section 13 (hard disk) on the basis of music data ID included in a reproduction request.

The control means searches a right information record section 25 (hard disk) on the basis of the music data ID included in the reproduction request in order to find whether or not the music data ID is recorded. If the music data ID is recorded, determination by the determination means 24 is not performed, and reproduction of the music data by the reproduction means 17 is allowed.

If the music data ID is not recorded in the right information record section 25, the control means 26 makes the determination means 24 perform determination. When the determination means 24 determines that a right is owned, this determination is recorded in the determination result record section 25. The embodiment can be applied to the third embodiment in the same manner.

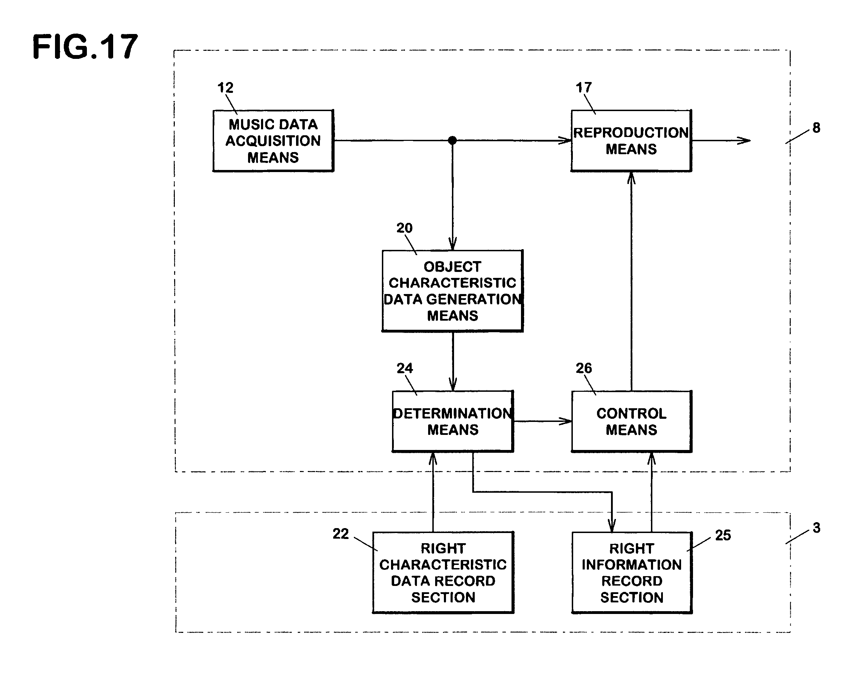

Further, the embodiment above may be applied to the second embodiment, and the right information record section 25 may be provided on a side of the management device 3 as shown in FIG. 17 (or may be provided on the side of the music reproduction device 8 as illustrated above, of course). In this case, a user ID and an ID of music data associated with each other are recorded in a right information record section 22. When the control means 26 accesses the right information record section, transmission is performed by adding a user ID (a telephone number or the like). As a result, right information concerning the user is transmitted from the management device 3.

(2) In the embodiment, the right characteristic data acquisition means generates right characteristic data when there is a right purchase request from the user. However, right characteristic data concerning music data may be generated beforehand and may be associated with an ID of music data and memorized. When there is a right purchase request from the user, recorded right characteristic data may be acquired on the basis of the ID of the music data included in the request.

(3) In the embodiment, encoded music data and right characteristic data are obtained over the Internet. However, these data may be obtained via a storage medium. In this case, an interface for accessing the storage medium is the music data acquisition means 12.

(4) In the embodiment, the waveform characteristic is extracted by using Fourier transform. However, the waveform characteristic may be extracted by extracting a characteristic in a shape on the basis of a waveform on a time axis.

Further, in the embodiment, one waveform characteristic algorithm is used. However, different algorithms (in which crossover frequency bands are different, for example) may be used to calculate two or more right characteristic data and object characteristic data. In this case, a matching determination is performed for each right characteristic data and object characteristic data given by each algorithm, and final matching is determined on the basis of all of the matching determinations. Here, the matching determination may be performed by weighting each algorithm.

(5) In the embodiment, whether or not a right is owned is determined depending on matching between right characteristic data and object characteristic data. In addition to this, determination may be performed also by considering matching between a time length of music registered beforehand and a time length of music to be reproduced. For example, when matching between right characteristic data and object characteristic data is equal to or more than a first predetermined level, it is determined that a right is owned. When matching between right characteristic data and object characteristic data is less than the first predetermined level and larger than a second predetermined level, it is determined whether or not matching of a time length is equal to or more than a predetermined value. It is assumed that a right is owned if the matching is equal to or more than the predetermined value and that a right is not owned if the matching is less than the predetermined value. On the other hand, when the matching between right characteristic data and object characteristic data is less than the second predetermined level, it is determined that a right is not owned.

(6) In the embodiment, the control means 26 performs control so that music is reproduced until it is determined that a right is owned or not owned. However, reproduction of music may not be performed until it is determined that a right is owned. Further, control may be performed in order to reproduce degraded music data if a right is not owned.

(7) In the embodiments, a case of music is described. However, the embodiments can be applied to a case of image contents in the same manner.

**Brief Description of Drawings**

FIG. 1 shows a constitution of music reproduction management system according to an embodiment of the present invention.
FIG. 2 shows a constitution of music reproduction management system according to the first embodiment of the present invention.
FIG. 2a shows a function block diagram of the contents server device 2 and the key issuing server device 4.
FIG. 2b shows a function block diagram of the mobile phone device 8.
FIG. 3 shows a hardware configuration of the contents server device 2.
FIG. 4 shows a hardware configuration of the key issuing server device 4.
FIG. 5 shows a hardware configuration of the mobile phone device 8.
FIG. 6 shows a flow chart of download processing.
FIG. 7 shows an example of a screen display of the mobile phone device 8.
FIG. 8 shows an example of waveform music data.
FIG. 9 shows a flow chart of generation of characteristic data.
FIG. 10 shows an example of a record of encoded music data and right characteristic data.
FIG. 11 shows a flow chart of a player program.
FIG. 12 shows a flow chart of a player program.
FIG. 13 shows a constitution of music reproduction management system according to the second embodiment.
FIG. 13a shows an example of data of the right characteristic data record section 22.
FIG. 14 shows a constitution of music reproduction management system according to the second embodiment.
FIG. 15 shows a constitution of music reproduction management system according to the third embodiment.
FIG. 16 shows a constitution of music reproduction management system according to other embodiments.
FIG. 17 shows a constitution of music reproduction management system according to other embodiments.
FIG. 18 shows a constitution of music reproduction management system according to the fourth embodiment.
FIG. 19 shows a flow chart of a player program according to the fourth embodiment.
FIG. 20 shows a flow chart of a player program according to the fourth embodiment.
FIG. 21 shows a whole constitution of music distribution system according to the fifth embodiment.
FIG. 22 shows a function block diagram of music distribution system according to the fifth embodiment.
FIG. 23 shows a flow chart of a control program according to the fifth embodiment.
FIG. 24 shows a whole constitution of music distribution system according to other embodiments.

**Description of Reference Numerals**

12: music data acquisition means
17: reproduction means
20: object characteristic data generation means
22: right characteristic data record section
24: determination means
26: control means

**Claims**

1. Music reproduction management system for managing reproduction of music, comprising:

   a right characteristic data record section for recording right characteristic data resulted from extracting a waveform characteristic of music waveform data obtained on the basis of music data whose right is owned by a user;
   music data acquisition means for acquiring music data; reproduction means for converting the acquired music data into music waveform data to be output as music;
   object characteristic data generation means for generating object characteristic data by extracting the waveform characteristic of the music waveform data obtained on the basis of the music data;
   determination means for determining whether or not right characteristic data matched with the object characteristic data is recorded in the right characteristic data record section; and
   control means for changing a reproduction state by the reproduction means according to a determination result of the determination means.

2. The music reproduction management system according to Claim 1, comprising:

   a management device; and
   music reproduction device which can communicate with the management device;

   wherein the management device further includes
   right characteristic data acquisition means for acquiring right characteristic data with regard to music data as a purchase request object in response to a purchase request from the music reproduction device, and
   transmitting means for transmitting the right characteristic data to the music reproduction device, and the music reproduction device has
   the right characteristic data record section,
   the music data acquisition means,
   the reproduction means,
   the object characteristic data generation means,
   the determination means, and the control means,
   and further includes
   reception record means for receiving right characteristic data from the management device and for recording the right characteristic data in the right characteristic data record section.

3. A management device which constructs music reproduction management system with music reproduction device, comprising:

   right characteristic data acquisition means for acquiring right characteristic data expressing a waveform characteristic of music waveform data obtained on the basis of music data as a purchase request object in response to a purchase request from the music reproduction device; and
   transmitting means for transmitting the right characteristic data to the music reproduction device.

4. Music reproduction device which constructs music reproduction management system with a management device, comprising:

   a right characteristic data record section for recording right characteristic data resulted from extracting a characteristic of music waveform data whose right is owned by a user;
   music data acquisition means for acquiring music data; reproduction means for converting the acquired music data into music waveform data to be output as music;
   object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing a reproduction state by the reproduction means according to a determination result of the determination means.

5. Music reproduction program which achieves a function described below by a computer and constructs music reproduction device:

means for accessing a right characteristic data record section which records right characteristic data resulted from extracting a characteristic of music waveform data whose right is owned by a user;
music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing a reproduction state by the reproduction means according to a determination result of the determination means.

6. The music reproduction device according to Claim 4 or the music reproduction program according to Claim 5, further comprising:

reception record means for receiving right characteristic data from the management device and for recording the right characteristic data in the right characteristic data record section.

7. The music reproduction management system according to Claim 1, comprising:

a management device; and
music reproduction device which can communicate with the management device;

wherein the management device has the right characteristic data record section,
right characteristic data of each user of the music reproduction device is recorded in the right characteristic data record section,
the music reproduction device has
the music data acquisition means,
the reproduction means,
the object characteristic data generation means,
the determination means, and
the control means, and
the determination means refers to the right characteristic data record section of the management device and determines whether right characteristic data matched with the object characteristic data associated with a user is recorded.

8. A management device which constructs music reproduction management system with music reproduction device, comprising:

a right characteristic data record section recorded by right characteristic data expressing a waveform characteristic of music waveform data obtained on the basis of music data whose right is owned by a user in relation to each user of music reproduction device; and
transmitting means for transmitting at least right characteristic data of a specified user recorded in the right characteristic data record section according to a request from the music reproduction device.

9. Music reproduction device which constructs music reproduction management system with a management device, comprising:

music data acquisition means for acquiring music data; reproduction means for converting the acquired music data into music waveform data to be output as music;
object characteristic data generation means for generating object characteristic data by extracting a waveform characteristic of the music waveform data obtained on the basis of the music data;
determination means which accesses a right characteristic data record section of the management device and determines whether right characteristic data matched with the object characteristic data associated with a user is recorded; and
control means for changing a reproduction state by the reproduction means according to a determination result of the determination means.

10. Music reproduction program which achieves a function described below by a computer and constructs music reproduction device:

music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means which accesses a right characteristic data record section of a management device and determines whether right characteristic data matched with the object characteristic data associated with a user is recorded; and
control means for changing a reproduction state by the reproduction means according to a determination result of the determination means.

11. The music reproduction management system according to Claim 1, comprising:

a management device; and
music reproduction device which can communicate with the management device;

wherein the management device includes
the right characteristic data record section,
the object characteristic data generation means,
the determination means, and
the control means,
the control means controls music data transmitted to the music reproduction device according to a determination result of the determination means in order to control reproduction by the reproduction means,
the music reproduction device includes
the music data acquisition means and
the reproduction means, and
the reproduction means reproduces music data transmitted from the management device.

12. A management device which constructs music reproduction management system with music reproduction device, comprising:

a right characteristic data record section for recording right characteristic data resulted from extracting a waveform characteristic of music waveform data obtained on the basis of music data whose right is owned by a user;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for controlling music data transmitted to music reproduction device according to a determination result of the determination means in order to control reproduction by reproduction means.

13. A management program which achieves a function described below by a computer and constructs a management device:

means for accessing a right characteristic data record section for recording right characteristic data resulted from extracting a waveform characteristic of music waveform data obtained on the basis of music data whose right is owned by a user;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for controlling music data transmitted to music reproduction device according to a determination result of the determination means in order to control a reproduction state by reproduction means.

14. The music reproduction management system according to Claim 7 or 11,
wherein the management device further includes right characteristic data acquisition means for acquiring right characteristic data with regard to music data as a purchase request object in response to a purchase request from the music reproduction device and for recording the right characteristic data associated with a user in the right characteristic data record section, and
the music reproduction device further includes transmitting means for transmitting the purchase request for music data to the management device.

15. The management device according to Claim 8 or 12, further comprising:

right characteristic data acquisition means for acquiring right characteristic data with regard to music data as a purchase request object in response to a purchase request from the music reproduction device and for recording the right characteristic data associated with a user in the right characteristic data record section.

16. The music reproduction management system according to Claim 14,
wherein the management device is constituted by including a contents server device and a key issuing server device,
the contents server device transmits music data according to a purchase request from the music reproduction device, and
the key issuing server device acquires right characteristic data corresponding to the music data transmitted from the contents server device according to the purchase request from the music reproduction device.

17. Any system, device, or program according to Claim 1, 2, 4 to 7, 9 to 12, or 14 to 16,
wherein the determination means records a determination result associated with an ID of music data, and
the object characteristic data generation means does not generate object characteristic data of the music data, the determination means does not perform a determination, and the control means performs control on the basis of the recorded determination result when the music data is reproduced for a second time or more.

18. Any system, device, or program according to Claim 1, 2, 4 to 7, 9 to 11, or 12 to 17,
wherein the control means does not allow the reproduction means to reproduce music data if a determination result of the determination means is negative.

19. Any system, device, or program according to Claim 1, 2, 4 to 7, 9 to 11, or 12 to 17,
wherein the control means allows the reproduction means to reproduce music data for a predetermined period of time even if a determination result of the determination means is negative and does not allow reproduction after the predetermined period of time.

20. Any system, device, or program according to Claim 1, 2, 4 to 7, 9 to 11, or 12 to 17,
wherein the control means allows the reproduction means to reproduce music data by degrading quality of the music data if a determination result of the determination means is negative.

21. Any system, device, or program according to Claim 1, 2, 4 to 8, 11, 12, 15, or 16 to 20,
wherein the right characteristic data record section is a detachable portable storage medium.

22. Any system, device, or program according to any of Claims 1 to 21,
wherein right characteristic data or object characteristic data are data made by sampling a starting part of music waveform data with a plurality of overlapping windows, by expressing a result of frequency analysis of the waveform sampled by each window in binary digit, and by arranging the result in order of time series.

23. The system, the device, or the program according to Claim 22,
wherein the determination means determines that right characteristic data and object characteristic data are matched with each other if a matching ratio of binary digit data in the right characteristic data and binary digit data in the object characteristic data exceeds a predetermined ratio.

24. The system, the device, or the program according to Claim 22 or 23,

wherein a plurality of right characteristic data and object characteristic data is generated with different parameters, and the determination means determines whether or not the right characteristic data and the object characteristic data are matched with each other depending on a matching ratio of a plurality of the right characteristic data and the object characteristic data.

25. The system, the device, or the program according to Claims 1 to 24,
wherein the management device is a management server device connected to the Internet, and
the music reproduction device is a portable terminal device which can be connected to the Internet.

26. The system, the device, or the program according to Claims 1 to 24,
wherein the management device is a portable terminal device, and
the music reproduction device is the music reproduction apparatus which can communicate with the portable terminal device.

27. The system, the device, or the program according to Claim 27,
wherein the music reproduction apparatus is a TV set, an audio apparatus, or a car navigation device.

28. The system, the device, or the program according to Claims 1 to 26, further comprising:

   record means for recording a determination result of the determination means in a determination result record section.

29. Music reproduction management method of managing reproduction of music,
wherein right characteristic data resulted from extracting a characteristic of music waveform data whose right is owned by a user is recorded in a right characteristic data record section by associating the right characteristic data with the user of music reproduction terminal device,
object characteristic data is generated by extracting a waveform characteristic of music waveform data obtained on the basis of music data as a reproduction object,
it is determined whether or not right characteristic data matched with the object characteristic data is recorded in the right characteristic data record section, and
a reproduction state by reproduction means is changed according to a determination result of determination means.

30. Music reproduction management system for managing reproduction of music, comprising:

   a right characteristic data record section for recording right characteristic data resulted from extracting a waveform characteristic of music waveform data obtained on the basis of music data whose right is owned by a user;
   music data acquisition means for acquiring music data; reproduction means for converting the acquired music data into music waveform data to be output as music;
   object characteristic data generation means for generating object characteristic data by extracting a waveform characteristic of music waveform data obtained on the basis of the music data;
   determination means for determining whether or not right characteristic data matched with the object characteristic data is recorded in the right characteristic data record section; and
   record means for recording a determination result of the determination means in a determination result record section.

31. The music reproduction management system according to Claim 30, comprising:

   a management device; and
   music reproduction device which can communicate with the management device;

wherein the management device further includes
right characteristic data acquisition means for acquiring right characteristic data with regard to music data as a purchase request object in response to a purchase request from the music reproduction device, and
transmitting means for transmitting the right characteristic data to the music reproduction device, and
the music reproduction device has
the right characteristic data record section,
the music data acquisition means,
the reproduction means,

the object characteristic data generation means,
the determination means, and
control means and
further includes
reception record means for receiving the right characteristic data from the management device and for recording the right characteristic data in the right characteristic data record section.

**32.** Music reproduction device which constructs music reproduction management system with a management device, comprising:

a right characteristic data record section for recording right characteristic data resulted from extracting a characteristic of music waveform data whose right is owned by a user;
music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
record means for recording a determination result of the determination means in a determination result record section.

**33.** Music reproduction program which achieves a function described below by a computer and constructs music reproduction device:

means for accessing a right characteristic data record section which records right characteristic data resulted from extracting a characteristic of music waveform data whose right is owned by a user;
music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
record means for recording a determination result of the determination means in a determination result record section.

**34.** The music reproduction management system according to Claim 30, comprising:

a management device; and
music reproduction device which can communicate with the management device;

wherein the management device has the right characteristic data record section,
right characteristic data of each user of the music reproduction device is recorded in the right characteristic data record section,
the music reproduction device has
the music data acquisition means,
the reproduction means,
the object characteristic data generation means,
the determination means, and
control means, and
the determination means refers to the right characteristic data record section of the management device and determines whether right characteristic data matched with object characteristic data associated with the user is recorded.

**35.** Music reproduction device which constructs music reproduction management system with a management device, comprising:

music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means which accesses a right characteristic data record section of the management device and determines whether right characteristic data matched with the object characteristic data associated with a user is recorded; and
record means for recording a determination result of the determination means in a determination result record section.

36. Music reproduction program which achieves a function described below by a computer and constructs music reproduction device:

music data acquisition means for acquiring music data; reproduction means for converting the acquired music data into music waveform data to be output as music;
object characteristic data generation means for generating object characteristic data by extracting a waveform characteristic of music waveform data obtained on the basis of the music data;
determination means which accesses a right characteristic data record section of a management device and determines whether right characteristic data matched with the object characteristic data associated with a user is recorded; and
record means for recording a determination result of the determination means in a determination result record section.

37. Music reproduction management method of managing reproduction of music,
wherein right characteristic data resulted from extracting a waveform characteristic of music waveform data obtained on the basis of music data whose right is owned by a user is recorded in a right characteristic data record section, the music data is acquired,
the acquired music data is converted into music waveform data and output as music,
object characteristic data is generated by extracting a waveform characteristic of music waveform data obtained on the basis of the music data,
it is determined whether or not right characteristic data matched with the object characteristic data is recorded in the right characteristic data record section, and
a determination result is recorded a determination result record section.

38. Music distribution management system for managing distribution of music data, comprising:

a first music record device; and
a second music record device;

wherein the first music record device includes
music data record section for recording music data,
a right characteristic data record section for recording right characteristic data resulted from extracting a waveform characteristic of music waveform data obtained on the basis of music data whose right is owned by a user, output means for reading out and externally outputting the music data recorded in the music data record section,
object characteristic data generation means for generating object characteristic data by extracting a waveform characteristic of music waveform data obtained on the basis of the music data,
determination means for determining whether or not right characteristic data matched with the object characteristic data is recorded in the right characteristic data record section and
control means for changing an output state by the output means according to a determination result of the determination means, and
the second music record device includes
music data record section for recording music data,
a right characteristic data record section for recording right characteristic data resulted from extracting a waveform characteristic of music waveform data obtained on the basis of music data whose right is owned by a user, input means for inputting the music data output from the first music device online or via a storage medium and for recording the music data in the music data record section, object characteristic data generation means for generating object characteristic data by extracting a waveform characteristic of music waveform data obtained on the basis of the music data,
determination means for determining whether or not right characteristic data matched with the object characteristic data is recorded in the right characteristic data record section, and
control means for changing an input state by the input means according to a determination result of the determination means.

**39.** Music record device, comprising:

music data record section for recording music data;
a right characteristic data record section for recording right characteristic data resulted from extracting a waveform characteristic of music waveform data obtained on the basis of music data whose right is owned by a user;
output means for reading out and externally outputting the music data recorded in the music data record section;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing an output state by the output means according to a determination result of the determination means.

**40.** A program which achieves a function described below by a computer:

means for accessing music data record section for recording music data;
means for accessing a right characteristic data record section for recording right characteristic data resulted from extracting a waveform characteristic of music waveform data obtained on the basis of music data whose right is owned by a user;
output means for reading out and externally outputting music data recorded in the music data record section;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing an output state by the output means according to a determination result of the determination means.

**41.** Music record device, comprising:

music data record section for recording music data;
a right characteristic data record section for recording right characteristic data resulted from extracting a waveform characteristic of music waveform data obtained on the basis of music data whose right is owned by a user;
input means for inputting music data output from a first music device online or via a storage medium;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing an input state by the input means according to a determination result of the determination means.

**42.** A program which achieves a function described below by a computer:

means for accessing music data record section for recording music data;
means for accessing a right characteristic data record section for recording right characteristic data resulted from extracting a waveform characteristic of music waveform data obtained on the basis of music data whose right is owned by a user;
input means for inputting music data output from a first music device online or via a storage medium;
object characteristic data generation means for generating object characteristic data by extracting a waveform characteristic of music waveform data obtained on the basis of the music data;
determination means for determining whether or not right characteristic data matched with the object characteristic data is recorded in the right characteristic data record section; and
control means for changing an input state by the input means according to a determination result of the determination means.

**43.** Music distribution management method of managing distribution of music data, comprising:

a first music record device; and
a second music record device;

wherein the first music record device
records music data in music data record section,
records right characteristic data resulted from extracting a waveform characteristic of music waveform data obtained on the basis of music data whose right is owned by a user in a right characteristic data record section,
reads out and externally outputs the music data recorded in the music data record section,
generates object characteristic data by extracting a waveform characteristic of music waveform data obtained on the basis of the music data,
determines whether or not right characteristic data matched with the object characteristic data is recorded in the right characteristic data record section, and
changes an output state by output means according to a determination result, and
the second music record device
records music data in music data record section,
records right characteristic data resulted from extracting a waveform characteristic of music waveform data obtained on the basis of music data whose right is owned by a user in a right characteristic data record section,
inputs music data output from the first music device online or via a storage medium,
generates object characteristic data by extracting a waveform characteristic of music waveform data obtained on the basis of the music data,
determines whether or not right characteristic data matched with the object characteristic data is recorded in the right characteristic data record section, and
changes an input state by input means according to a determination result.

# FIG.1

# FIG.2

# FIG.2a

# FIG.2b

EP 1 912 204 A1

TRANSMITTING MEANS — 10

RECEIVING MEANS — 12

ABJECT MUSIC DATA RECORD SECTION — 14

CONVERSION MEANS — 16

SOUND OUTPUT SECTION — 18

OBJECT CHARACTERISTIC DATA GENERATION MEANS — 20

RIGHT CHARACTERISTIC DATA RECORD SECTION — 22

DETERMINATION MEANS — 24

CONTROL MEANS — 26

# FIG.3

40 MEMORY

42 COMMUNICATION CIRCUIT

44 CPU

46

48 CONTENTS SERVER PROGRAM

50 MUSIC CONTENTS DB

EP 1 912 204 A1

# FIG.4

**52** MEMORY

**54** COMMUNICATION CIRCUIT

**56** CPU

**58** | **60** KEY ISSUING SERVER PROGRAM

# FIG.5

EP 1 912 204 A1

68
SPEAKER

62
MEMORY

64
COMMUNICATION CIRCUIT

66
MICROPHONE

67
D/A CONVERSION

70
NONVOLATILE MEMORY

72
CPU

74
76 BROWSER PROGRAM
78 PLAYER PROGRAM

80
DISPLAY

82
KEY

# FIG.6

| MOBILE PHONE 8 | CONTENTS SERVER DEVICE 2 | KEY ISSUING SERVER DEVICE 4 |
|---|---|---|

START          START          START

S1 MENU REQUESTED

S11 MENU TRANSMITTED

S2 MENU DISPLAYED

S3 DOWNLOADING REQUESTED

S12 MUSIC CONTENTS READ OUT AND TRANSMITTED

S4 MUSIC CONTENTS RECORDED

S13 ACCOUNTING PROCESSING

S21 MUSIC CONTENTS CONVERTED INTO WAVEFORM DATA

S22 RIGHT CHARACTERISTIC DATA GENERATED

S23 RIGHT CHARACTERISTIC DATA TRANSMITTED

S5 RIGHT CHARACTERISTIC DATA RECORDED

END          END          END

# FIG.7A

CHOOSE CONTENTS
YOU WANT TO DOWNLOAD.
(100 YEN FOR EACH)

I'LL BE THERE FOR YOU
ASTERISK
FLOWER

# FIG.7B

CHOOSE CONTENTS YOU WANT TO PLAY.

ASTERISK

OSAKA BAY BLUES

MIKUNI STATION

# FIG.7C

YOU CAN BUY THE CONTENTS
YOU HAVE JUST LISTENED TO.
(100 YEN)

BUY

# FIG.8

AMPLITUDE

t

# FIG.9

START

S221 — SAMPLING OF J FRAMES BY HANNING WINDOWS

S222 — FFT FOR EACH FRAME

S223 — DIVIDED INTO A NUMBER K OF FREQUENCY BANDS

S224 — ENERGY E(j,k) OF EACH FREQUENCY BAND CALCULATED

S225 — PRINT VALUE P(j,k) CALCULATED

END

0.4sec

$f_1$  $f_2$  $f_3$  $f_K$  $f_{K+1}$

## FIG.10A

| | |
|---|---|
| ENCODED MUSIC DATA | CODE1 |
| ENCODED MUSIC DATA | CODE2 |
| ENCODED MUSIC DATA | CODE3 |
| ENCODED MUSIC DATA | CODE4 |

## FIG.10B

| | |
|---|---|
| RIGHT CHARACTERISTIC DATA | KEY1 |
| RIGHT CHARACTERISTIC DATA | KEY2 |
| RIGHT CHARACTERISTIC DATA | KEY4 |

# FIG.11

```
                    ┌─────────────┐
                    │    START    │
                    └──────┬──────┘
                           │
        ┌──────────────────▼──────────┐
   S31  │  REPRODUCTION               │
        │  PROCESS START              │
        │  INSTRUCTION                │
        └──────────────┬──────────────┘
                       │
   S32         ╱WAVEFORM MUSIC╲
          NO  ╱ DATA EQUIVALENT TO╲
         ◄───╱ A PREDETERMINED PERIOD╲
             ╲ OF TIME STORED        ╱
              ╲        ?            ╱
                    YES
                     │
   S33   ┌───────────▼─────────┐
         │    OBJECT           │
         │  CHARACTERISTIC     │
         │  DATA GENERATED     │
         └──────────┬──────────┘
                    │
                   (1)
```

```
        ┌─────────────────────┐
        │  MUSIC CONTENTS      │  S41
        │  READ OUT            │
        └──────────┬──────────┘
                   │
        ┌──────────▼──────────┐
        │  CONVERTED INTO      │  S42
        │  WAVEFORM MUSIC      │
        │  DATA AND RECORDED   │
        └──────────┬──────────┘
                   │
        ┌──────────▼──────────┐
        │  WAVEFORM MUSIC      │  S43
        │  DATA REPRODUCED     │
        └─────────────────────┘
```

# FIG.12

S34 — FIRST RIGHT CHARACTERISTIC DATA READ OUT

S35 — ERROR MARGIN WITH OBJECT CHARACTERISTIC DATA OBTAINED

S36 — ERROR MARGIN EQUAL TO OR MORE THAN A PREDETERMINED VALUE?

YES → REPRODUCTION PROCESSING CONTINUED — S37

NO

S38 — ALL RIGHT CHARACTERISTIC DATA PROCESSED?

YES

NO

S39 — NEXT RIGHT CHARACTERISTIC DATA READ OUT

S40 — REPRODUCTION PROCESSING DISCONTINUED

S41 — BROWSER PROGRAM STARTED

S42 — BROWSER PROGRAM INSTRUCTED TO CONNECT TO THE CONTENTS SERVER DEVICE

# FIG.13

```
┌ ─ ─ ─ ─ ─ ─ ─ ─ ─ ─ ─ ─ ─ ─ ─ ─ ─ ─ ─ ─ ─ ─ ─ ─ ─ ─ ─ ─ ─ ─ ┐
```

**12**

┌──────────────┐                          **17**
│ MUSIC DATA   │                    ┌──────────────┐
│ ACQUISITION  │─────────●─────────→│ REPRODUCTION │────→  **8**
│ MEANS        │          │         │ MEANS        │
└──────────────┘          │         └──────────────┘
                          ↓                  ↑
                  **20**                     │
         ┌───────────────────────┐           │
         │ OBJECT CHARACTERISTIC  │           │
         │ DATA GENERATION MEANS  │           │
         └───────────────────────┘           │
                     │                        │
            **24**   ↓              **26**    │
         ┌──────────────┐      ┌──────────────┐
         │ DETERMINATION│─────→│ CONTROL      │
         │ MEANS        │      │ MEANS        │
         └──────────────┘      └──────────────┘
                  ↑
         **22**   │
         ┌────────────────────────┐
         │ RIGHT CHARACTERISTIC   │          **3**
         │ DATA RECORD SECTION    │
         └────────────────────────┘

# FIG.13a

| |
|---|
| USER ID : ○○○－○○○○－○○○○ |
| RIGHT CHARACTERISTIC DATA |
| RIGHT CHARACTERISTIC DATA |
| ⋮ |
| USER ID : ✕✕✕－✕✕✕✕－✕✕✕✕ |
| RIGHT CHARACTERISTIC DATA |
| RIGHT CHARACTERISTIC DATA |
| ⋮ |

# FIG.14

EP 1 912 204 A1

# FIG.15

EP 1 912 204 A1

# FIG.16

REPRODUCTION
REQUEST

12
MUSIC DATA
ACQUISITION
MEANS

17
REPRODUCTION
MEANS

8

13
MUSIC DATA
RECORD
SECTION

20
OBJECT
CHARACTERISTIC
DATA GENERATION
MEANS

24
DETERMINATION
MEANS

26
CONTROL
MEANS

22
RIGHT
CHARACTERISTIC
DATA RECORD
SECTION

25
RIGHT
INFORMATION
RECORD SECTION

EP 1 912 204 A1

42

FIG.17

# FIG.18

EP 1 912 204 A1

# FIG.19

START

S31 — REPRODUCTION PROCESS START INSTRUCTION

S32 — WAVEFORM MUSIC DATA EQUIVALENT TO A PREDETERMINED PERIOD OF TIME STORED?

NO

YES

S33 — OBJECT CHARACTERISTIC DATA GENERATED

1

S41 — MUSIC CONTENTS READ OUT

S42 — CONVERTED INTO WAVEFORM MUSIC DATA AND RECORDED

S43 — WAVEFORM MUSIC DATA REPRODECED

# FIG.20

```
                    ( 1 )
                      |
                      v
S34 ┌──────────────────────┐
    │   FIRST RIGHT         │
    │   CHARACTERISTIC      │
    │   DATA READ OUT       │
    └──────────────────────┘
          │
          v
S35 ┌──────────────────────┐
    │   ERROR MARGIN        │
    │   WITH OBJECT         │
    │   CHARACTERISTIC      │
    │   DATA OBTAIN         │
    └──────────────────────┘
          │
          v
S36    ╱ ERROR MARGIN ╲        YES
      ╱ EQUAL TO OR MORE ╲──────────────┐
      ╲ THAN A PREDETERMINED ╱          │
       ╲    VALUE?   ╱                  v
          │  NO                 S52 ┌──────────────┐
          v                         │ REPRODUCTION │
S38    ╱ ALL RIGHT ╲     YES        │ PROCESSING   │
      ╱ CHARACTERISTIC ╲────┐       │ CONTINUED    │
      ╲ DATA PROCESSED ╱    │       └──────────────┘
       ╲     ?     ╱        │
          │  NO             │
          v                 │
S39 ┌──────────────────┐    │
    │  NEXT RIGHT       │    │
    │  CHARACTERISTIC   │    │
    │  DATA READ OUT    │    │
    └──────────────────┘    │
          │                 │
          v                 v
S51 ┌──────────────────┐
    │   "LEGAL"         │
    │   RECORDED        │
    └──────────────────┘
          │
          v
S53 ┌──────────────────┐
    │  REPRODUCTION     │
    │  CONTINUES        │
    └──────────────────┘
          │
          v
```

# FIG.21

103 — MUSIC REPRODUCTION DEVICE

105

101 — MUSIC REPRODUCTION DEVICE

# FIG.22

101

13a MUSIC DATA RECORD SECTION

19a OUTPUT MEANS

20a OBJECT CHARACTERISTIC DATA GENERATION MEANS

22a RIGHT CHARACTERISTIC DATA RECORD SECTION

24a DETERMINATION MEANS

103

19b INPUT MEANS

13b MUSIC DATA RECORD SECTION

20b OBJECT CHARACTERISTIC DATA GENERATION MEANS

24b DETERMINATION MEANS

22b RIGHT CHARACTERISTIC DATA RECORD SECTION

EP 1 912 204 A1

# FIG.23

MUSIC REPRODUCTION DEVICE 101

START

S201 MUSIC DATA READ OUT

S202 OBJECT CHARACTERISTIC DATA GENERATED

S203 RIGHT DETERMINED? — NO / YES

S204 MUSIC DATA TRANSMITTED

MUSIC REPRODUCTION DEVICE 103

START

S301 MUSIC DATA RECEIVED

S302 OBJECT CHARACTERISTIC DATA GENERATED

S303 RIGHT DETERMINED? — NO / YES

S304 RECEPTION CONTINUED

S305 RECEPTION DISCONTINUED

# FIG.24

101 — MUSIC REPRODUCTION DEVICE

150 — MEMORY CARD

150 — MEMORY CARD

103 — MUSIC REPRODUCTION DEVICE

## INTERNATIONAL SEARCH REPORT

| International application No. |
| --- |
| PCT/JP2006/313066 |

A. CLASSIFICATION OF SUBJECT MATTER
*G10K15/02*(2006.01)i, *G06F17/30*(2006.01)i, *G06F21/24*(2006.01)i, *G06Q50/00*
(2006.01)i, *G10L19/00*(2006.01)i

According to International Patent Classification (IPC) or to both national classification and IPC

B. FIELDS SEARCHED

Minimum documentation searched (classification system followed by classification symbols)
G10K15/02, G06F17/30, G06F21/24, G06Q50/00, G10L19/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2004-318230 A (Matsushita Electric Industrial Co., Ltd.), 11 November, 2004 (11.11.04), Full text; all drawings (Family: none) | 1-43 |
| Y | JP 7-311587 A (Brother Industries, Ltd.), 28 November, 1995 (28.11.95), Full text; all drawings & US 5619425 A | 1-43 |
| Y | JP 2003-77218 A (Funai Electric Co., Ltd.), 14 March, 2003 (14.03.03), Full text; all drawings (Family: none) | 7-21,34-36 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 20 September, 2006 (20.09.06) | 03 October, 2006 (03.10.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/313066

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2002-149167 A  (Kabushiki Kaisha Yuzumobairu), 24 May, 2002 (24.05.02), Full text; all drawings (Family: none) | 7-21,34-36 |
| Y | Masayuki NAKAE et al., "User Yokyu ni Tekigo shita Service o Teikyo suru Capsule-ka Contents", Information Processing Society of Japan Kenkyu Hokoku, 'Denshika Chiteki Zaisan· Shakai Kiban' 3-11, Vol.99, No.11, pages 79 to 86, 30 January, 1999 (30.01.99) | 11-20 |
| Y | JP 2004-96411 A  (Matsushita Electric Industrial Co., Ltd.), 25 March, 2004 (25.03.04), (Family: none) | 16,17,19 |
| Y | JP 2004-62870 A  (Matsushita Electric Industrial Co., Ltd.), 26 February, 2004 (26.02.04), Full text; all drawings & US 2003/0225863 A1    & WO 03/103252 A2 | 17,19 |
| Y | JP 2003-241770 A  (Yamaha Corp.), 29 August, 2003 (29.08.03), Full text; all drawings & US 2002/0026867 A1 | 19 |
| Y | JP 11-259971 A  (Sony Corp.), 24 September, 1999 (24.09.99), Full text; all drawings & US 6222807 B1 | 38,41-43 |

Form PCT/ISA/210 (continuation of second sheet) (April 2005)

**EP 1 912 204 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004198509 A